(19) Europäisches Patentamt
European Patent Office
Office européen des brevets

(11) **EP 4 637 073 A1**

(12) **EUROPEAN PATENT APPLICATION**
published in accordance with Art. 153(4) EPC

(43) Date of publication:
**22.10.2025 Bulletin 2025/43**

(21) Application number: **23917805.6**

(22) Date of filing: **20.01.2023**

(51) International Patent Classification (IPC):
**H04L 5/14** (2006.01)   **H04L 5/00** (2006.01)
**H04W 72/04** (2023.01)

(52) Cooperative Patent Classification (CPC):
**H04L 5/00; H04L 5/14; H04W 72/04**

(86) International application number:
**PCT/KR2023/001040**

(87) International publication number:
**WO 2024/154847 (25.07.2024 Gazette 2024/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Samsung Electronics Co., Ltd.**
**Suwon-si, Gyeonggi-do 16677 (KR)**

(72) Inventors:
• **KIM, Sundo**
**Suwon-si Gyeonggi-do 16677 (KR)**
• **LEE, Kwonjong**
**Suwon-si Gyeonggi-do 16677 (KR)**

(74) Representative: **Gulde & Partner**
**Patent- und Rechtsanwaltskanzlei mbB**
**Berliner Freiheit 2**
**10785 Berlin (DE)**

(54) **METHOD AND DEVICE FOR RESOURCE ALLOCATION IN WIRELESS COMMUNICATION SYSTEM SUPPORTING MULTIPLE MULTIPLEXING SCHEMES**

(57) The present disclosure relates to a 5G or 6G communication system for supporting higher data transmission rates. The present disclosure relates to a method and a device for efficiently configuring/allocating resources in a wireless communication system supporting multiple multiplexing schemes. A method for configuring FD resources by a base station in a wireless communication system supporting multiple multiplexing schemes according to an embodiment of the present disclosure comprises the operations of: transmitting configuration information including the number of consecutive slots, in which a physical resource block (PRB) configuration is possible in a frequency domain, and information about a start slot among the consecutive slots; and transmitting, on the basis of the configuration information, information indicating at least one resource to be allocated to a terminal.

FIG. 10

EP 4 637 073 A1

## Description

### [Technical Field]

The disclosure relates to a method and device for resource allocation in a wireless communication system supporting a plurality of multiplexing schemes, such as time division duplex (TDD), frequency division duplex (FDD), and full duplex (FD).

### [Background Art]

Wireless communication technologies have been developed mainly for human services, such as voice, multimedia, and data communication. As 5th-generation (5G) communication systems are commercially available, connected devices are expected to explosively increase and to be connected to a communication network. Examples of things connected to a network may include vehicles, robots, drones, home appliances, displays, smart sensors installed in various infrastructures, construction machinery, and factory equipment. Mobile devices will evolve into various form factors, such as augmented reality glasses, virtual reality headsets, and hologram devices. In the 6th-generation (6G) era, efforts are being made to develop an enhanced 6G communication system to provide various services by connecting hundreds of billions of devices and things. For this reason, the 6G communication system is called a beyond 5G system.

In the 6G communication system expected to be realized around year 2030, the maximum transmission rate is tera (i.e., 1000 gigabit) bps, and the wireless latency is 100 microseconds ($\mu$sec). In other words, the transmission rate of the 6G communication system is 50 times faster than that of the 5G communication system, and the wireless latency is reduced to one tenth.

To achieve these high data rates and ultra-low latency, 6G communication systems are considered to be implemented in terahertz bands (e.g., 95 gigahertz (95 GHz) to 3 terahertz (3 THz) bands). As the path loss and atmospheric absorption issues worsen in the terahertz band as compared with millimeter wave (mmWave) introduced in 5G, technology that may guarantee signal reach, that is, coverage, would become more important. As major techniques for ensuring coverage, there need to be developed multi-antenna transmission techniques, such as new waveform, beamforming, massive multiple-input and multiple-output (MIMO), full dimensional MIMO (FD-MIMO), array antennas, or large-scale antennas, which exhibit better coverage characteristics than radio frequency (RF) devices and orthogonal frequency division multiplexing (OFDM). New technologies, such as a metamaterial-based lens and antennas, high-dimensional spatial multiplexing technology using an orbital angular momentum (OAM), and a reconfigurable intelligent surface (RIS), are being discussed to enhance the coverage of the terahertz band signals.

For 6G communication systems to enhance frequency efficiency and system network for 6G communication systems include full-duplex technology, there are being developed full-duplex technology in which uplink and downlink simultaneously utilize the same frequency resource at the same time, network technology that comprehensively use satellite and high-altitude platform stations (HAPSs), network architecture innovation technology that enables optimization and automation of network operation and supports mobile base stations, dynamic spectrum sharing technology through collision avoidance based on prediction of spectrum usages, artificial intelligence (AI)-based communication technology that uses AI from the stage of designing and internalizes end-to-end AI supporting function to thereby optimize the system, and next-generation distributed computing technology that realizes services that exceed the limitation of the UE computation capability by ultra-high performance communication and mobile edge computing (MEC) or clouds. Further, continuous attempts have been made to reinforce connectivity between device, further optimizing the network, prompting implementation of network entities in software, and increase the openness of wireless communication by the design of a new protocol to be used in 6G communication systems, implementation of a hardware-based security environment, development of a mechanism for safely using data, and development of technology for maintaining privacy.

Such research and development efforts for 6G communication systems would implement the next hyper-connected experience via hyper-connectivity of 6G communication systems which encompass human-thing connections as well as thing-to-thing connections. Specifically, the 6G communication system would be able to provide services, such as truly immersive extended reality (XR), high-fidelity mobile hologram, and digital replica. Further, services, such as remote surgery, industrial automation and emergency response would be provided through the 6G communication system thanks to enhanced security and reliability and would have various applications in medical, auto, or home appliance industries.

### [Detailed Description of Invention]

### [Technical Problems]

The disclosure provides a method and device for efficient resource allocation in a wireless communication system supporting a plurality of multiplexing schemes.

Further, the disclosure provides a method and device for efficiently configuring/allocating resources in time and frequency domains in a wireless communication system supporting a plurality of multiplexing schemes.

**[Technical Solution to Problems]**

According to an embodiment of the disclosure, a method for configuring resources by a base station in a wireless communication system supporting a plurality of multiplexing schemes comprises transmitting configuration information including a number of contiguous slots in which a physical resource block (PRB) is configurable in a frequency domain and information about a start slot among the contiguous slots and transmitting information indicating at least one resource to be allocated to a user equipment (UE) based on the configuration information.

According to an embodiment of the disclosure, a base station in a wireless communication system supporting a plurality of multiplexing schemes comprises a transceiver and a processor configured to transmit, through the transceiver, configuration information including a number of contiguous slots in which a physical resource block (PRB) is configurable in a frequency domain and information about a start slot among the contiguous slots and transmit, through the transceiver, information indicating at least one resource to be allocated to a UE based on the configuration information.

According to an embodiment of the disclosure, a method performed by a UE in a wireless communication system supporting a plurality of multiplexing schemes comprises receiving, from a base station, configuration information including a number of contiguous slots in which a physical resource block (PRB) is configurable in a frequency domain and information about a start slot among the contiguous slots, receiving downlink control information indicating at least one resource to be allocated to the UE, and performing reception of a downlink signal or transmission of an uplink signal using the at least one resource, based on the configuration information and the downlink control information.

According to an embodiment of the disclosure, a UE in a wireless communication system supporting a plurality of multiplexing schemes comprises a transceiver and a processor configured to receive, from a base station through the transceiver, configuration information including a number of contiguous slots in which a physical resource block (PRB) is configurable in a frequency domain and information about a start slot among the contiguous slots, receive, through the transceiver, downlink control information indicating at least one resource to be allocated to the UE, and perform reception of a downlink signal or transmission of an uplink signal, through the transceiver, using the at least one resource, based on the configuration information and the downlink control information.

**[Brief Description of Drawings]**

FIG. 1 is a view illustrating a basic structure of a time-frequency domain, which is a radio resource region in which data or control channels are transmitted in a 5G system;

FIG. 2 is a view illustrating a frame, a subframe, and a slot structure of a 5G system;

FIG. 3 is a view illustrating an example of a bandwidth part configuration in a 5G system;

FIG. 4 is a view illustrating an example of a control resource set (CORESET) in which a downlink control channel is transmitted in a 5G system;

FIG. 5 is a view illustrating an example of a basic unit of time and frequency resource constituting a download control channel available in a 5G system;

FIGS. 6A and 6B are views illustrating a multiplexing scheme in a wireless communication system;

FIG. 7 is a view illustrating an example of a resource allocation scheme in a wireless communication system supporting a plurality of multiplexing schemes according to an embodiment of the disclosure;

FIG. 8 is a view illustrating an example of a slot configuration method in a wireless communication system supporting a plurality of multiplexing schemes;

FIG. 9 is a view schematically illustrating a method for configuring resources in time and frequency domains in a wireless communication system supporting a plurality of multiplexing schemes according to an embodiment of the disclosure;

FIG. 10 is a view illustrating an example of a method for configuring FD resources in a wireless communication system supporting a plurality of multiplexing schemes according to an embodiment of the disclosure;

FIG. 11 is a view illustrating a signaling procedure in a method for configuring resources in time and frequency domains in a wireless communication system according to an embodiment of the disclosure;

FIG. 12A is a view illustrating an example of a method for allocating a slot configuration including an FD slot in a single pattern according to an embodiment of the disclosure;

FIG. 12B is a view illustrating another example of a method for allocating a slot configuration including an FD slot in a single pattern according to an embodiment of the disclosure;

FIG. 13 is a view illustrating an example of a method for allocating a slot configuration including an FD slot in multiple patterns according to an embodiment of the disclosure;

FIG. 14 is a view illustrating an example of a method for configuring a PRB pattern for P slots where a PRB configuration is possible in a slot configuration according to an embodiment of the disclosure;

FIG. 15 is a view illustrating a specific example of a method for configuring a PRB pattern for P slots where a PRB configuration is possible in a slot configuration according to an embodiment of the disclosure;

FIG. 16 is a view illustrating another example of a method for configuring a PRB pattern for P slots where a PRB configuration is possible in a slot configuration according to an embodiment of the disclosure; and

FIG. 17 is a view illustrating an example of a configuration of a network entity in a wireless communication system according to an embodiment of the disclosure.

**[Mode for the Invention]**

Hereinafter, embodiments of the disclosure are described in detail with reference to the accompanying drawings.

In describing embodiments, the description of technologies that are known in the art and are not directly related to the disclosure is omitted. This is for further clarifying the gist of the disclosure without making it unclear.

For the same reasons, some elements may be exaggerated or schematically shown. The size of each element does not necessarily reflects the real size of the element. The same reference numeral is used to refer to the same element throughout the drawings.

Advantages and features of the disclosure, and methods for achieving the same may be understood through the embodiments to be described below taken in conjunction with the accompanying drawings. However, the disclosure is not limited to the embodiments disclosed herein, and various changes may be made thereto. The embodiments disclosed herein are provided only to inform one of ordinary skilled in the art of the category of the disclosure. The disclosure is defined only by the appended claims. The same reference numeral denotes the same element throughout the specification.

It should be appreciated that the blocks in each flowchart and combinations of the flowcharts may be performed by computer program instructions. Since the computer program instructions may be equipped in a processor of a general-use computer, a special-use computer or other programmable data processing devices, the instructions executed through a processor of a computer or other programmable data processing devices generate means for performing the functions described in connection with a block(s) of each flowchart. Since the computer program instructions may be stored in a computer-available or computer-readable memory that may be oriented to a computer or other programmable data processing devices to implement a function in a specified manner, the instructions stored in the computer-available or computer-readable memory may produce a product including an instruction means for performing the functions described in connection with a block(s) in each flowchart. Since the computer program instructions may be equipped in a computer or other programmable data processing devices, instructions that generate a process executed by a computer as a series of operational steps are performed over the computer or other programmable data processing devices and operate the computer or other programmable data processing devices may provide steps for executing the functions described in connection with a block(s) in each flowchart.

Further, each block may represent a module, segment, or part of a code including one or more executable instructions for executing a specified logical function(s). Further, it should also be noted that in some replacement execution examples, the functions mentioned in the blocks may occur in different orders. For example, two blocks that are consecutively shown may be performed substantially simultaneously or in a reverse order depending on corresponding functions.

As used herein, the term "unit" means a software element or a hardware element such as a field-programmable gate array (FPGA) or an application specific integrated circuit (ASIC). A unit plays a certain role. However, the term "unit" is not limited as meaning a software or hardware element. A 'unit' may be configured in a storage medium that may be addressed or may be configured to reproduce one or more processors. Accordingly, as an example, a 'unit' includes elements, such as software elements, object-oriented software elements, class elements, and task elements, processes, functions, attributes, procedures, subroutines, segments of program codes, drivers, firmware, microcodes, circuits, data, databases, data architectures, tables, arrays, and variables. A function provided in an element or a 'unit' may be combined with additional elements or may be split into sub elements or sub units. Further, an element or a 'unit' may be implemented to reproduce one or more CPUs in a device or a security multimedia card. According to embodiments of the disclosure, a "...unit" may include one or more processors.

As used herein, each of such phrases as "A and/or B", "A or B", "at least one of A and B", "at least one of A or B", "A, B, or C", "at least one of A, B, and C", and "at least one of A, B, or C" may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order).

Hereinafter, the operational principle of the disclosure is described below with reference to the accompanying drawings. When determined to make the subject matter of the disclosure unclear, the detailed of the known functions or configurations may be skipped. The terms as used herein are defined considering the functions in the disclosure and may be replaced with other terms according to the intention or practice of the user or operator. Therefore, the terms should be defined based on the overall disclosure. Hereinafter, the base station may be an entity allocating resource to the UE and may be at least one of gNode B, eNode B, Node B, base station (BS), wireless access unit, base station controller, or node over network. The base station may be a network entity including at least one of an integrated access and backhaul-donor (IAB-donor), which is a gNB providing network access to UE(s) through a network of backhaul and access links in the 5G system, and an IAB-node, which is a radio access network (RAN) node supporting NR backhaul links to the IAB-donor or another IAB-node and supporting NR access link(s) to UE(s). The UE is wirelessly connected through the IAB-node and may transmit/receive data to and from the IAB-donor connected with at least one IAB-node through the backhaul link. The user equipment (UE) may include a terminal, mobile station (MS), cellular phone, smartphone, computer, or a multimedia system capable of performing communication functions. Of course, it is not limited to the above examples.

For ease of description, hereinafter, some of the terms and names defined in the 3rd generation partnership project long term evolution (3GPP LTE) or 3GPP new radio (NR) standards may be used. However, the disclosure is not limited by such terms and names and may be likewise applicable to systems conforming to other standards.

Post-LTE, next-generation communication systems, e.g., NR systems, i.e., 5G systems, are required to freely reflect various needs of users and service providers and thus to support services that meet various requirements. Services considered for 5G systems include, e.g., increased mobile broadband (eMBB), massive machine type communication (MMTC), and ultra-reliability low latency communication (URLLC).

According to an embodiment, eMBB aims to provide a further enhanced data transmission rate as compared with LTE, LTE-A, or LTE-pro. For example, eMBB for 5G communication systems needs to provide a peak data rate of 20Gbps on download and a peak data rate of 10Gbps on uplink in terms of one base station. The 5G communication system is also required to provide the increased user perceived data rate of the UE. To meet such requirements, transmit (TX)/receive (RX) techniques, as well as multiple input multiple output (MIMO), need to further be enhanced. The data transmission rate required for 5G communication systems may be met by using a broader frequency bandwidth than 20Mhz in a frequency band ranging 3Ghz to 6Ghz or a frequency band of 6Ghz or more instead of the 2Ghz band currently adopted in LTE.

mMTC is also considered to support application services, such as internet of things (IoT) in the 5G system. To efficiently provide IoT, mMTC may be required to support massive UEs in the cell, enhance the coverage of the UE and the battery time, and reduce UE costs. IoT terminals are attached to various sensors or devices to provide communication functionality, and thus, it needs to support a number of UEs in each cell (e.g., 1,000,000 UEs/km$^2$). Since mMTC-supportive UEs, by the nature of service, are highly likely to be located in shadow areas not covered by the cell, such as the underground of a building, it may require much broader coverage as compared with other services that the 5G communication system provides. mMTC-supportive UEs, due to the need for being low cost and difficulty in frequently exchanging batteries, may be required to have a very long battery life.

The URLLC, as a cellular-based wireless communication service used for a specific purpose (mission-critical), may be a service used for remote control for robots or machinery, industrial automation, unmanned aerial vehicles, remote health care, and emergency alerts and may be required to provide communication that provides ultra-low latency and ultra-high reliability. For example, URLLC-supportive services need to meet an air interface latency of less than 0.5 milliseconds simultaneously with a packet error rate of $10^{-5}$ or less. Thus, for URLLC-supportive services, the 5G communication system may be required to be designed to provide a shorter transmit time interval (TTI) than those for other services and allocate a broad resource in the frequency band. However, the aforementioned mMTC, URLLC, and eMBB are merely examples of different service types, and the service types to which the disclosure is applied are not limited to the above-described examples.

Services considered in the 5G system described above should be merged together based on one framework. In other words, for efficient resource management and control, it is preferable that the services are integrated into a single system and controlled and transmitted, rather than being independently operated.

Although 5G system is described in connection with embodiments of the disclosure, as an example, embodiments of the disclosure may also apply to other communication systems with similar technical background or channel form. Further, embodiments of the disclosure may be modified in such a range as not to significantly depart from the scope of the disclosure under the determination by one of ordinary skill in the art and such modifications may be applicable to other communication systems.

In the disclosure, information shared between the base station and the UE may be transferred by at least one of higher layer signaling and L1 signaling.

Higher layer signaling may be signaling corresponding to at least one or a combination of one or more of the following signaling.

- Master information block (MIB)

- SIB (System Information Block) or SIB X (X=1, 2, ...)
- Radio resource control (RRC)
- Medium access control (MAC) control element (CE)

Further, L1 signaling may be signaling corresponding to at least one or a combination of one or more of the following physical layer channel signaling methods using signaling.

- Physical downlink control channel (PDCCH)
- Downlink control information (DCI)
- UE-specific DCI
- Group common DCI
- Common DCI
- Scheduling DCI (e.g., DCI used for scheduling downlink or uplink data)
- Non-scheduling DCI (e.g., DCI not for the purpose of scheduling downlink or uplink data)
- Physical uplink control channel (PUCCH)
- Uplink control information (UCI)

The frame structure of the 5G system is described below in more detail with reference to the drawings.

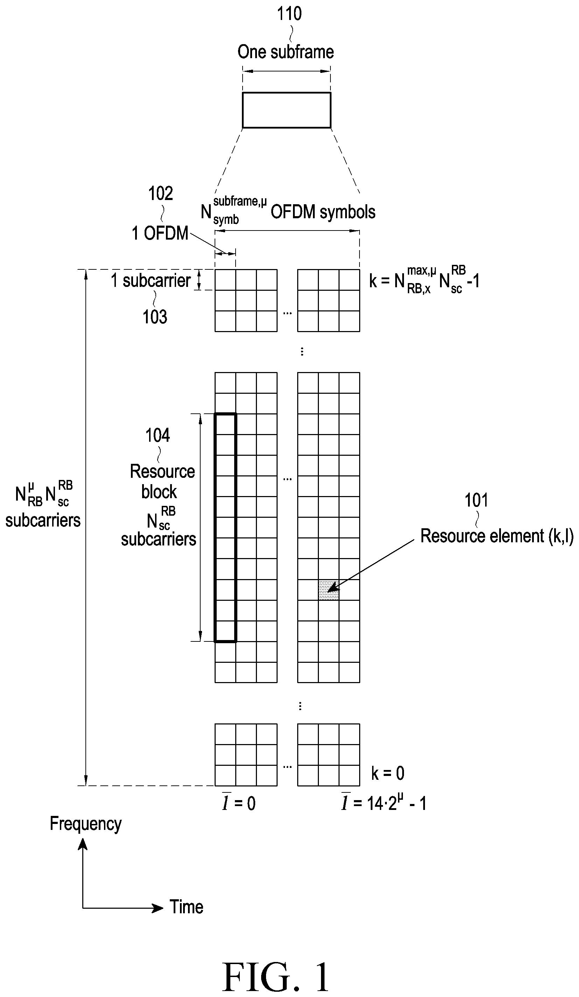

FIG. 1 is a view illustrating a basic structure of a time-frequency domain, which is a radio resource region in which data or control channels are transmitted in a 5G system.

In FIG. 1, the horizontal axis refers to the time domain, and the vertical axis refers to the frequency domain. A basic unit of a resource in the time and frequency domain is a resource element (RE) 101, which may be defined by one orthogonal frequency division multiplexing (OFDM) symbol 102 on the time axis, and by one subcarrier 103 on the frequency axis. In the frequency domain. $N_{sc}^{RB}$ (e.g.,, 12) consecutive REs may constitute one resource block (RB) 104. In FIG. 1, $N_{\text{symb}}^{\text{subframe},\mu}$ is the number of OFDM symbols per subframe 110 for subcarrier spacing setting ($\mu$). For a more detailed description of the resource structure used in the 5G system, refer to TS 38.211 section 4 standard.

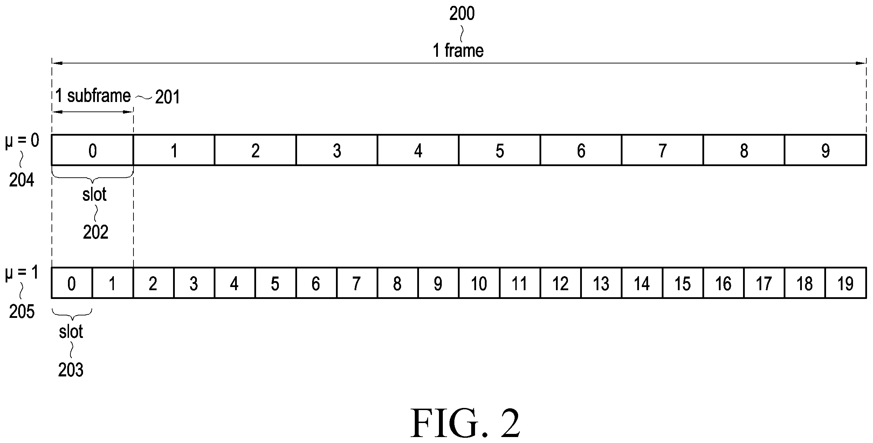

FIG. 2 is a view illustrating a frame, a subframe, and a slot structure of a 5G system.

FIG. 2 illustrates example structures of a frame 200, a subframe 201, and a slot 202. One frame 200 may be defined as 10 ms. One subframe 201 may be defined as 1 ms, and thus, one frame 200 may consist of a total of 10 subframes 201. One slot 202 or 203 may be defined as 14 OFDM symbols (that is, the number ($N_{\text{symb}}^{\text{slot}}$) of symbols per slot=14). One subframe 201 may be composed of one or more slots 202 and 203, and the number of slots 202 and 203 per subframe 201 may differ depending on $\mu$ (204 or 205), which is a set value for the subcarrier spacing. FIG. 2 illustrates an example in which the subcarrier spacing setting value $\mu$=0 (204) and an example in which the subcarrier spacing setting value $\mu$=1 (205). When $\mu$ = 0 (204), one subframe 201 may consist of one slot 202, and when $\mu$ = 1 (205), one subframe 201 may consist of two slots (203). In other words, according to the set subcarrier spacing value $\mu$, the number ($N_{\text{slot}}^{\text{subframe},\mu}$) of slots per subframe may vary, and accordingly, the number ($N_{\text{slot}}^{\text{frame},\mu}$) of slots per frame may differ. According to each subcarrier spacing $\mu$, $N_{\text{slot}}^{\text{subframe},\mu}$ and $N_{\text{slot}}^{\text{frame},\mu}$ may be defined in Table 1 below.

[Table 1]

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

A configuration of a bandwidth part (BWP) in a 5G communication system is described below in detail with reference to the drawings.

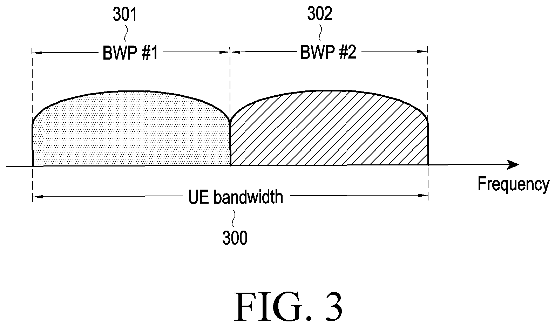

FIG. 3 is a view illustrating an example of a bandwidth part configuration in a 5G system. FIG. 3 illustrates an example in which a UE bandwidth 300 is divided into two bandwidth parts, e.g., bandwidth part #1 (BWP #1) 301 and bandwidth part #2 (BWP #2) 302. The base station may configure one or more bandwidth parts in the UE and may configure the following information for each bandwidth part.

[Table 2]

```
BWP ::=                          SEQUENCE {
bwp-Id                              BWP-Id,
  (bandwidth part identity)
locationAndBandwidth                INTEGER (1..65536),
(bandwidth part location)
subcarrierSpacing                   ENUMERATED {n0, n1, n2, n3, n4, n5},
(Subcarrier spacing)
cyclicPrefix                        ENUMERATED { extended }
(cyclic prefix)
}
```

In Table 2, "locationAndBandwidth" denotes the location and bandwidth in the frequency domain of the bandwidth part, "subcarrierSpacing" denotes the subcarrier spacing to be used in the bandwidth part, and "cyclicPrefix" denotes whether the extended cyclic prefix (CP) is used for the bandwidth part.

However, without being limited thereto, other various BWP-related parameters than the above-described configuration information may be configured in the UE. The base station may transfer the information to the UE through higher layer signaling, e.g., radio resource control (RRC) signaling. At least one bandwidth part among one or more configured bandwidth parts may be activated. Whether to activate the configured bandwidth part may be transferred from the base station to the UE semi-statically through RRC signaling or dynamically through downlink control information (DCI).

According to an embodiment, before radio resource control (RRC) connected, the UE may be configured with an initial bandwidth part (BWP) for initial access by the base station via a master information block (MIB). More specifically, the UE may receive configuration information for a search space and control resource set (CORESET) in which physical downlink control channel (PDCCH) may be transmitted to receive system information (remaining system information, RMSI or system information block 1 which may correspond to SIB 1) necessary for initial access through the MIB in the initial access phase. Each of the control resource set and search space configured with the MIB may be regarded as identity (ID) 0. The control resource set and the search space configured through the MIB may be referred to as a common control resource set and a common search space, respectively. The base station may provide the UE with configuration information, such as frequency allocation information, time allocation information, and numerology for control region #0, via the MIB. Further, the base station may provide the UE with configuration information for occasion and monitoring period for control region #0, i.e., configuration information for search space #0, via the MIB. The UE may regard the frequency range set as control resource set #0 obtained from the MIB, as the initial BWP for initial access. In this case, the identity (ID) of the initial BWP may be regarded as 0. The control resource set may be referred to as a control region or a control resource region.

The configuration of the bandwidth part supported by the 5G communication system described above may be used for various purposes.

According to an embodiment, when the bandwidth supported by the UE is smaller than the system bandwidth, this may be supported through the bandwidth part configuration. For example, as the base station configures the UE with the frequency position of the bandwidth part, the UE may transmit/receive data in a specific frequency position in the system bandwidth.

According to an embodiment, for the purpose of supporting different numerologies, the base station may configure the UE with a plurality of bandwidth parts. For example, to support data transmission/reception using a subcarrier spacing of 15kHz and a subcarrier spacing of 30kHz for some UE, the base station may configure the UE with two bandwidths, as subcarrier spacings of 15kHz and 30kHz. The different bandwidth parts may be frequency division multiplexed and, when data is transmitted/received at a specific subcarrier spacing, the bandwidth part configured as the corresponding subcarrier spacing may be activated.

According to an embodiment, for the purpose of reducing power consumption of the UE, the base station may configure the UE with bandwidth parts having different sizes of bandwidths. For example, when the UE supports a bandwidth exceeding a very large bandwidth, e.g., a bandwidth of 100MHz, and transmits/receives data always using the bandwidth, significant power consumption may occur. In particular, it is very inefficient in terms of power consumption to monitor an unnecessary downlink control channel using a large bandwidth of 100 MHz in a situation where there is no traffic. For the purpose of reducing power consumption of the UE, the base station may configure a bandwidth part of a relatively small bandwidth to the UE, e.g., a bandwidth part of 20 MHz, in the UE. In a no-traffic situation, the UE may perform monitoring in the 20MHz bandwidth and, if data occurs, the UE may transmit/receive data in the 100MHz bandwidth according to an instruction from the base station.

In a method for configuring a bandwidth part, UEs before RRC connected may receive configuration information for an initial bandwidth via a master information block (MIB) in the initial access phase. More specifically, the UE may be configured with a control resource set (CORESET) for the downlink control channel where the downlink control information (DCI) scheduling the system information block (SIB) may be transmitted from the MIB of the physical broadcast channel (PBCH). The bandwidth of the control resource set configured by the MIB may be regarded as the initial BWP, and the UE may receive the physical downlink shared channel (PDSCH), which transmits the SIB, via the configured initial BWP. The initial BWP may be utilized for other system information (OSI), paging, and random access as well as for receiving SIB.

If the UE is configured with one or more BWPs, the base station may indicate, to the UE, a change (or switching or transition) in BWP using the BWP indicator in the DCI. As an example, when the currently activated bandwidth part of the UE is bandwidth part#1 301 in FIG. 3, the base station may indicate, to the UE, bandwidth part#2 302 with the bandwidth part indicator in the DCI, and the UE may change the bandwidth part to bandwidth part#2 302, indicated with the bandwidth part indicator in the received DCI.

As described above, since DCI-based bandwidth part changing may be indicated by the DCI scheduling PDSCH or PUSCH, the UE, if receiving a bandwidth part change request, is supposed to be able to receive or transmit the PDSCH or PUSCH, scheduled by the DCI, in the changed bandwidth part without trouble. To that end, the standard specified requirements for delay time TBWP required upon changing bandwidth part, which may be defined as follows.

[Table 3]

| $\mu$ | NR Slot length (ms) | BWP switch delay $T_{BWP}$ (slots) | |
| --- | --- | --- | --- |
| | | Type 1[Note 1] | Type 2[Note 1] |
| 0 | 1 | 1 | 3 |
| 1 | 0.5 | 2 | 5 |
| 2 | 0.25 | 3 | 9 |
| 3 | 0.125 | 6 | 18 |
| Note 1: Depends on UE capability. | | | |
| Note 2: If the BWP switch involves changing of SCS, the BWP switch delay is determined by the larger one between the SCS before BWP switch and the SCS after BWP switch. | | | |

The requirement for delay of bandwidth part change supports type 1 or type 2 according to the capability of the UE. The UE may report a supportable bandwidth part delay time type to the base station.

If the UE receives, in slot n, DCI including a bandwidth part change indicator according to the above-described requirements for bandwidth part change delay time, the UE may complete a change to the new bandwidth part, indicated by the bandwidth part change indicator, at a time not later than slot n+$T_{BWP}$, and may perform transmission/reception on the data channel scheduled by the DCI in the changed, new bandwidth part. Upon scheduling data channel in the new bandwidth part, the base station may determine time domain resource allocation for data channel considering the UE's bandwidth part change delay time $T_{BWP}$. In other words, when scheduling a data channel with the new bandwidth part, in a method for determining a time domain resource allocation for the data channel, the base station may schedule a corresponding data channel after the bandwidth part change delay time. Thus, the UE may not expect that the DCI indicating the bandwidth part change indicates a slot offset (K0 or K2) smaller than the bandwidth part change delay time ($T_{BWP}$).

If the UE has received the DCI (e.g., DCI format 1_1 or 0_1) indicating the bandwidth part change, the UE may perform no transmission or reception during the time period from the third symbol of the slot in which the PDCCH including the DCI has been received to the start point of the slot indicated by the slot offset (K0 or K2) value indicated by the time domain resource allocation indicator field in the DCI. For example, if the UE receives the DCI indicating a bandwidth part change in slot n, and the slot offset value indicated by the DCI is K, the UE may perform no transmission or reception from the third symbol of slot n to a symbol before slot n+K (i.e., the last symbol of slot n+K-1).

Next, a synchronization signal (SS)/PBCH block in the 5G system is described.

The SS/PBCH block may mean a physical layer channel block composed of primary SS (PSS), secondary SS (SSS), and PBCH. Details are as follows.

- PSS: A signal that serves as a reference for downlink time/frequency synchronization and provides part of the information for cell ID
- SSS: serves as a reference for downlink time/frequency synchronization, and provides the rest of the information for cell ID, which PSS does not provide. Additionally, it may serve as a reference signal for demodulation of PBCH.

- PBCH: provides essential system information necessary for the UE to transmit and receive data channel and control channel. The essential system information may include search space-related control information indicating radio resource mapping information for a control channel and scheduling control information for a separate data channel for transmitting system information.
- SS/PBCH block: The SS/PBCH block is composed of a combination of PSS, SSS, and PBCH. One or more SS/PBCH blocks may be transmitted within 5 ms, and each transmitted SS/PBCH block may be distinguished with an index.

The UE may detect the PSS and SSS in the initial access phase and may decode the PBCH. The UE may obtain the MIB from the PBCH and may be therefrom configured with control resource set (CORESET) #0 (which may correspond to a control resource set having a control resource set index of 0). The UE may perform monitoring on control resource set #0, assuming that the selected SS/PBCH block and the demodulation reference signal (DMRS) transmitted in control resource set #0 are quasi-co-located (QCLed). The UE may receive system information as downlink control information transmitted in control resource set #0. The UE may obtain configuration information related to random access channel (RACH) required for initial access from the received system information. The UE may transmit the physical RACH (PRACH) to the base station considering the selected SS/PBCH index, and the base station receiving the PRACH may obtain information for the SS/PBCH block index selected by the UE. The base station may know which block the UE has selected from the SS/PBCH blocks and monitors control resource set #0 related thereto.

Next, downlink control information (DCI) in the 5G system is described in detail.

Scheduling information for uplink data (or physical uplink shared channel (PUSCH) or downlink data (or physical downlink data channel (PDSCH) in the 5G system is transmitted from the base station through DCI to the UE. The UE may monitor the DCI format for fallback and the DCI format for non-fallback for PUSCH or PDSCH. The fallback DCI format may be composed of fixed fields predefined between the base station and the UE, and the non-fallback DCI format may include configurable fields.

DCI may be transmitted through the PDCCH, which is a physical downlink control channel, via channel coding and modulation. A cyclic redundancy check (CRC) is added to the DCI message payload, and the CRC is scrambled with the radio network temporary identifier (RNTI) that is the identity of the UE. Different RNTIs may be used for the purposes of the DCI message, e.g., UE-specific data transmission, power control command, or random access response. In other words, the RNTI is not explicitly transmitted, but the RNTI is included in the CRC calculation process and transmitted. Upon receiving the DCI message transmitted on the PDCCH, the UE identifies the CRC using the allocated RNTI, and when the CRC is correct, the UE may be aware that the message has been transmitted to the UE.

For example, DCI scheduling a PDSCH for system information (SI) may be scrambled to SI-RNTI. The DCI scheduling a PDSCH for a random access response (RAR) message may be scrambled to RA-RNTI. DCI scheduling a PDSCH for a paging message may be scrambled with P-RNTI. The DCI providing a slot format indicator (SFI) may be scrambled to SFI-RNTI. The DCI providing transmit power control (TPC) may be scrambled to TPC-RNTI. The DCI for scheduling a UE-specific PDSCH or PUSCH may be scrambled with cell RNTI (C-RNTI).

DCI format 0_0 may be used as fallback DCI for scheduling PUSCH, and in this case, CRC may be scrambled to C-RNTI. DCI format 0_0 in which CRC is scrambled to C-RNTI may include, e.g., the following information.

[Table 4]

| |
|---|
| - Identifier for DCI formats - [1] bit<br>- Frequency domain resource assignment - $\lceil \log_2(N_{RB}^{UL,BWP}(N_{RB}^{UL,BWP}+1)/2) \rceil$ ] bits<br>- Time domain resource assignment - X bits<br>- Frequency hopping flag - 1 bit.<br>- Modulation and coding scheme - 5 bits<br>- New data indicator - 1 bit<br>- Redundancy version - 2 bits<br>- HARQ process number - 4 bits<br>- Transmit power control (TPC) command for scheduled PUSCH - [2] bits<br>- Uplink (UL)/supplementary UL (SUL) indicator - 0 or 1 bit |

DCI format 0_1 may be used as non-fallback DCI for scheduling PUSCH, and in this case, CRC may be scrambled to C-RNTI. DCI format 0_1 in which CRC is scrambled to C-RNTI may include, e.g., the following information.

[Table 5]

- Carrier indicator - 0 or 3 bits
- UL/SUL indicator - 0 or 1 bit
- Identifier for DCI formats - [1] bits
- Bandwidth part indicator - 0, 1 or 2 bits
- Frequency domain resource assignment

• For resource allocation type 0, $\left\lceil N_{RB}^{UL\_BWP} / P \right\rceil$ bits

• For resource allocation type 1, $\left\lceil \log_2(N_{RB}^{UL\_BWP}(N_{RB}^{UL\_BWP}+1)/2) \right\rceil$ bits

- Time domain resource assignment -1, 2. 3, or 4 bits
- Virtual resource block (VRB)-to-physical resource block (PRB) mapping - 0 or 1 bit. only for resource allocation type 1.
• 0 bit if only resource allocation type 0 is configured;
• 1 bit otherwise.
- Frequency hopping flag - 0 or 1 bit, only for resource allocation type 1.
• 0 bit if only resource allocation type 0 is configured:
• 1 bit otherwise.
- Modulation and coding scheme - 5 bits
- New data indicator - 1 bit
- Redundancy version - 2 bits
- HARQ process number - 4 bits

---

- 1st downlink assignment index - 1 or 1 bits
• 1 bit for semi-static HARQ-ACK codebook;
• 2 bits for dynamic HARQ-ACK codebook with single HARQ-ACK codebook.
- 2nd downlink assignment index - 0 or 2 bits
• 2 bits for dynamic HARQ-ACK codebook with two HARQ-ACK sub-codebooks;
• 0 bit otherwise.
- TPC command for scheduled PUSCH - 2 bits

---

- SRS resource indicator -

$$\left\lceil \log_2\left( \sum_{k=1}^{L_{max}} \binom{N_{SRS}}{k} \right) \right\rceil$$

or $\left\lceil \log_2(N_{SRS}) \right\rceil$ bits

•

$$\left\lceil \log_2\left( \sum_{k=1}^{L_{max}} \binom{N_{SRS}}{k} \right) \right\rceil$$

bits for non-codebook based PUSCH ransmission;

• $\left\lceil \log_2(N_{SRS}) \right\rceil$ bits for codebook based PUSCH transmission.
- Precoding information and number of layers -up to 6 bits
- Antenna ports - up to 5 bits
- SRS request - 2 bits
- CSI request - 0, 1, 2, 3, 4, 5, or 6 bits
- Code block group (CBG) transmission information - 0, 2, 4, 6, or 8 bits

(continued)

- Phase tracking reference signal-demodulation reference signal relationship (PTRS-DMRS association) - 0 or 2 bits.
- beta_offset indicator - 0 or 2 bits
- Demodulation reference signal (DMRS) sequence initialization - 0 or 1 bit

DCI format 1_0 may be used as fallback DCI for scheduling PDSCH, and in this case, CRC may be scrambled to C-RNTI. DCI format 1_0 in which CRC is scrambled to C-RNTI may include, e.g., the following information.

[Table 6]

- Identifier for DCI formats - [1] bit
- Frequency domain resource assignment - $\left[\left\lceil \log_2(N_{RB}^{DL,BWP}(N_{RB}^{DL,BWP}+1)/2)\right\rceil\right]$ bits
- Time domain resource assignment - X bits
- VRB-to-PRB mapping - 1 bit.
- Modulation and coding scheme - 5 bits
- New data indicator - 1 bit
- Redundancy version - 2 bits
- HARQ process number - 4 bits
- Downlink assignment index - 2 bits
- TPC command for scheduled PUCCH - [2] bits
- Physical uplink control channel (PUCCH) resource indicator - 3 bits
- PDSCH-to-HARQ feedback timing indicator - [3] bits

DCI format 1_1 may be used as non-fallback DCI for scheduling PDSCH, and in this case, CRC may be scrambled to C-RNTI. DCI format 1_1 in which CRC is scrambled to C-RNTI may include, e.g., the following information.

[Table 7]

- Carrier indicator - 0 or 3 bits
- Identifier for DCI formats - [1] bits
- Bandwidth part indicator - 0, 1 or 2 bits
- Frequency domain resource assignment
• For resource allocation type 0, $\left\lceil N_{RB}^{DL,BWP}/P\right\rceil$ bits
• For resource allocation type 1, $\left\lceil \log_2(N_{RB}^{DL,BWP}(N_{RB}^{DL,BWP}+1)/2)\right\rceil$ bits
- Time domain resource assignment -1, 2, 3, or 4 bits
- VRB-to-PRB mapping - 0 or 1 bit, only for resource allocation type 1.
• 0 bit if only resource allocation type 0 is configured;
• 1 bit otherwise.
- Physical resource block (PRB) bundling size indicator - 0 or 1 bit
- Rate matching indicator - 0, 1, or 2 bits
- Zero power channel state information reference signal (ZP CSI-RS) trigger - 0, 1, or 2 bits

For transport block 1:
- Modulation and coding scheme - 5 bits
- Modulation and coding scheme - 5 bits
- Redundancy version - 2 bits

For transport block 2
- Modulation and coding scheme - 5 bits
- Modulation and coding scheme - 5 bits
- Redundancy version - 2 bits
- HARQ process number - 4 bits

(continued)

For transport block 2
- Downlink assignment index - 0 or 2 or 4 bits
- TPC command for scheduled PUCCH - 2 bits
- PUCCH resource indicator - 3 bits
- PDSCH-to-HARQ_feedback timing indicator - 3 bits
- Antenna ports - 4, 5 or 6 bits
- Transmission configuration indication - 0 or 3 bits
- SRS request - 2 bits
- CBG transmission information - 0, 2, 4, 6, or 8 bits
- Code block group (CBG) flushing out information - 0 or 1 bit
- DMRS sequence initialization - 1 bit- DMRS sequence initialization- 1 bit

A downlink control channel in a 5G system is described.

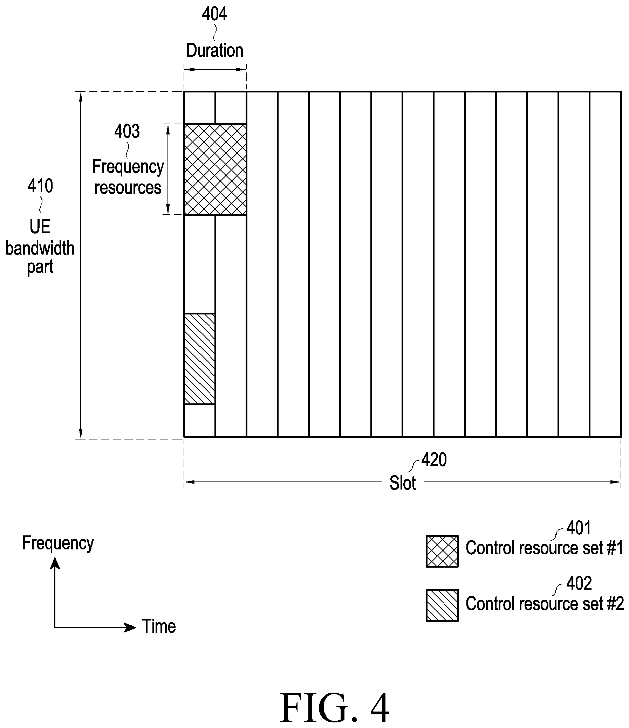

FIG. 4 is a view illustrating an example of a control resource set (CORESET) where the download control channel is transmitted in the 5G system.

FIG. 4 illustrates an example in which two control resource sets (control resource set #1 401 and control resource set #2 402) are configured in one slot 420 on the time axis, and a UE bandwidth part 410 is configured on the frequency axis. The control resource sets 401 and 402 may be configured to a particular frequency resource 403 in the overall system bandwidth part 410 on the frequency axis. FIG. 4 illustrates that the specific frequency resource 403 is an example of a frequency resource configured in control resource set #1 401. The control resource set may be configured with one or more OFDM symbols on the time axis, which may be defined as control resource set duration 404. Referring to the example of FIG. 4, control resource set #1 401 may be configured as a control resource set length of two symbols, and control resource set #2 402 may be configured as a control resource set length of one symbol.

The control resource set in the 5G system described above may be configured in the UE by the base station through higher layer signaling (e.g., system information, master information block (MIB), or radio resource control (RRC) signaling). Configuring a UE with a control resource set means providing the UE with such information as the identifier (ID) of the control resource set, the frequency position of the control resource set, and symbol length of the control resource set. For example, the configuration information for the control resource set may include the following information.

[Table 8]

```
ControlResourceSet ::=                        SEQUENCE {
    -- Corresponds to L1 parameter 'CORESET-ID'

    controlResourceSetId                ControlResourceSetId,
      (control region identity)
    frequencyDomainResources              BIT STRING (SIZE (45)),
      (frequency axis resource allocation information)
    duration                                INTEGER (1..maxCoReSetDuration),
      (time axis resource allocation information)
    cce-REG-MappingType                          CHOICE {
      (CCE-to-REG mapping scheme)
          interleaved                            SEQUENCE {

              reg-BundleSize                        ENUMERATED {n2, n3, n6},
      (REG bundle size)

              precoderGranularity                    ENUMERATED
{sameAsREG-bundle, allContiguousRBs},

              interleaverSize                        ENUMERATED {n2, n3, n6}
      (interleaver size)

          shiftIndex
    INTEGER(0..maxNrofPhysicalResourceBlocks-1)
    OPTIONAL
          (interleaver shift)
          },
        nonInterleaved                        NULL
        },
    tci-StatesPDCCH                          SEQUENCE(SIZE
(1..maxNrofTCI-StatesPDCCH)) OF TCI-StateId                OPTIONAL,
      (QCL configuration information)
    tci-PresentInDCI                    ENUMERATED {enabled}
}
```

In Table 8 above, tci-StatesPDCCH (simply referred to as transmission configuration indication (TCI) state) configuration information may include information for one or more synchronization signal (SS)/physical broadcast channel (PBCH) block indexes or channel state information reference signal (CSI-RS) index quasi-co-located (QCLed) with the DMRS transmitted in the corresponding control resource set.

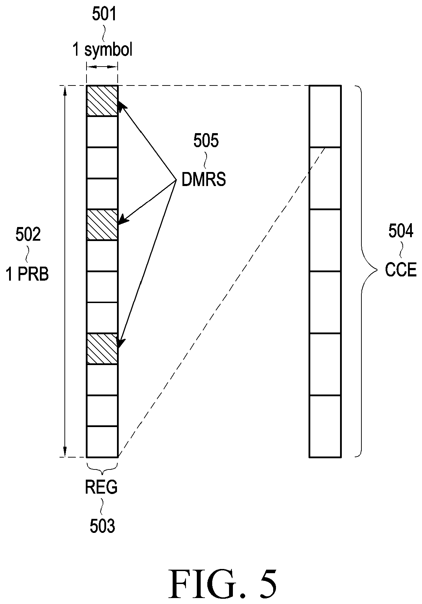

FIG. 5 is a view illustrating an example of a basic unit of time and frequency resource constituting a download control channel available in a 5G system. Referring to FIG. 5, the basic unit of time and frequency resources constituting the downlink control channel may be referred to as a resource element group (REG) 503, and the REG 503 may be defined with one OFDM symbol 501 on the time axis and with one physical resource block (PRB) 502, i.e., 12 subcarriers, on the frequency axis. The base station may configure a downlink control channel allocation unit by concatenating REGs 503.

As in the example of FIG. 5, if the basic unit for allocation of a downlink control channel in the 5G system is a control channel element (CCE) 504, one CCE 504 may be composed of multiple REGs 503. In the example of the REG 503 illustrated in FIG. 5, the REG 503 may be constituted of 12 REs, and if one CCE 504 is constituted of six REGs 503, one CCE 504 may be constituted of 72 REs. When the download control resource set is set, the region may be constituted of multiple CCEs 504, and a particular download control channel may be mapped to one or more CCEs 504 according to the aggregation level (AL) in the control resource set and be transmitted. The CCEs 504 in the control resource set are distinguished with numbers, and in this case, the numbers of the CCEs 504 may be assigned according to a logical mapping scheme.

The basic unit, i.e., the REG 503, of the download control channel shown in FIG. 5 may contain REs to which the DCI is mapped and the region to which the DMRS 505, a reference signal for decoding the REs, is mapped. As shown in FIG. 5, three DMRSs 505 may be transmitted in one REG 503. The number of CCEs necessary to transmit a PDCCH may be, e.g., 1, 2, 4, 8, or 16 depending on the aggregation level (AL), and different numbers of CCEs may be used to implement link adaptation of downlink control channel. For example, if AL=L, one downlink control channel may be transmitted via L CCEs. The UE needs to detect a signal while being unaware of information for downlink control channel and, for blind decoding, a search space is defined which indicates a set of CCEs. The search space is a set of candidate control channels constituted of CCEs that the UE needs to attempt to decode on the given aggregation level, and since there are several aggregation levels to bundle up 1, 2, 4, 8, or 16 CCEs, the UE has a plurality of search spaces. A search space set (Set) may be defined as a set of search spaces at all set aggregation levels.

Search spaces may be classified into a common search space and a UE-specific search space. A predetermined group of UEs or all the UEs may search for the common search space of the PDCCH to receive cell-common control information, e.g., paging message, or dynamic scheduling for system information. For example, PDSCH scheduling allocation information for transmitting an SIB containing, e.g., cell service provider information may be received by investigating the common search space of the PDCCH. In the case of the common search space, since a certain group of UEs or all the UEs need receive the PDCCH, it may be defined as a set of CCEs previously agreed on. Scheduling allocation information for the UE-specific PDSCH or PUSCH may be received by inspecting the UE-specific search space of PDCCH. The UE-specific search space may be UE-specifically defined with a function of various system parameters and the identity of the UE.

In the 5G system, the parameters for the search space for the PDCCH may be configured in the UE by the base station through higher layer signaling (e.g., SIB, MIB, or RRC signaling). For example, the base station may configure the UE with, e.g., the number of PDCCH candidates at each aggregation level L, monitoring period for search space, monitoring occasion of symbol unit in slot for search space, search space type (common search space or UE-specific search space), combination of RNTI and DCI format to be monitored in the search space, and control resource set index to be monitored in the search space. For example, configuration information for the search space for the PDCCH may include the following information.

[Table 9]

```
SearchSpace ::=                        SEQUENCE {
    -- Identity of the search space. SearchSpaceId = 0 identifies the SearchSpace
configured via PBCH (MIB) or ServingCellConfigCommon.
    searchSpaceId                      SearchSpaceId,
     (search space identity)
    controlResourceSetId               ControlResourceSetId,
     (control region identity)
    monitoringSlotPeriodicityAndOffset CHOICE {
     (monitoring slot level period)
        sl1                                NULL,
        sl2                                INTEGER (0..1),
        sl4                                INTEGER (0..3),
        sl5                            INTEGER (0..4),
        sl8                                INTEGER (0..7),
        sl10                               INTEGER (0..9),
        sl16                               INTEGER (0..15),
        sl20                               INTEGER (0..19)
    }
    duration(monitoring duration) INTEGER (2..2559)
    monitoringSymbolsWithinSlot                BIT STRING (SIZE (14))
     (monitoring symbol in slots)
    nrofCandidates                     SEQUENCE {
     (number of PDCCH candidate groups per aggregation level)
        aggregationLevel1                  ENUMERATED  {n0,  n1,  n2,  n3,
n4, n5, n6, n8},
        aggregationLevel2                  ENUMERATED  {n0,  n1,  n2,  n3,
n4, n5, n6, n8},
        aggregationLevel4                  ENUMERATED  {n0,  n1,  n2,  n3,
n4, n5, n6, n8},
        aggregationLevel8                  ENUMERATED  {n0, n1, n2, n3, n4,
n5, n6, n8},
        aggregationLevel16                 ENUMERATED  {n0, n1, n2, n3, n4,
n5, n6, n8}
    },

    searchSpaceType                    CHOICE {
    (search space type)
        -- Configures this search space as common search space (CSS) and DCI formats
to monitor.
        common                                 SEQUENCE {
        (Common search space)
        }
```

```
        ue-Specific                        SEQUENCE {
    (UE-specific search space)
            -- Indicates whether the UE monitors in this USS for DCI formats 0-0 and
1-0 or for formats 0-1 and 1-1.
            formats                         ENUMERATED    {formats0-0-
And-1-0, formats0-1-And-1-1},
            ...
            }
```

According to the configuration information, the base station may configure one or more search space sets to the UE. According to an embodiment, the base station may configure the UE with search space set 1 and search space set 2 and configure it to monitor DCI format A, scrambled to X-RNTI in search space set 1, in the common search space and to monitor DCI format B, scrambled to Y-RNTI in search space set 2, in the UE-specific search space. In the X-RNTI and Y-RNTI, "X" and "Y" may correspond to one of various RNTIs.

According to the above-described configuration information, one or more search space sets may be present in the common search space or the UE-specific search space. For example, search space set#1 and search space set#2 may be configured as the common search space, and search space set#3 and search space set#4 may be configured as the UE-specific search space.

DCI formats in the 5G system may follow the definition of Table 10 below as an example.

[Table 10]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

In the disclosure, full duplex (FD) system means a system capable of simultaneously transmitting/receiving uplink and downlink signals in the same time resource unlike the time division duplex (TDD) or frequency division duplex (FDD) systems. The TDD, FDD, and FD schemes may be referred to as a duplex scheme.

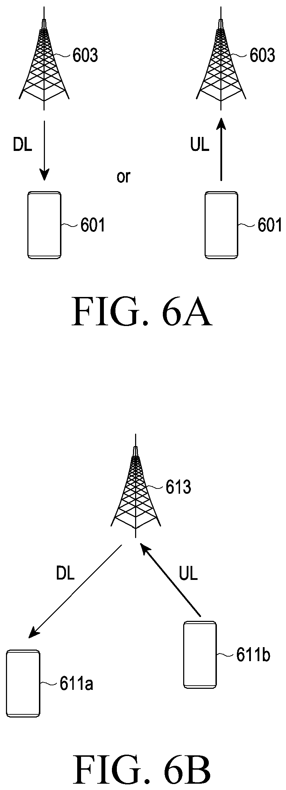

The TDD scheme is a multiplexing scheme that allocates resources at different times for uplink and downlink in the same frequency band as in the example of FIG. 6A. In the TDD scheme, the UE 601 may receive a downlink (DL) signal from the base station 603 at time t1 and may transmit an uplink (UL) signal to the base station 603 at time t2. Simultaneous transmission and reception of an uplink signal and a downlink signal cannot be performed at the same time. The FDD scheme is a multiplexing scheme that allocates resources in different frequency bands for uplink and downlink at the same time and is incapable of simultaneous transmission/reception of uplink and downlink signals in the same frequency band. In the FD scheme, an uplink (UL) signal and downlink (DL) signal may be simultaneously transmitted/received at the same time. In other words, in the FD scheme, as in the example of FIG. 6B, the base station 613 may transmit a downlink (DL) signal to the UE 611a and receive an uplink (UL) signal from the UE 611b at the same time. In the FD scheme, the entire frequency band may be allocated as uplink resources and downlink resources at the same time in which case the FD scheme is called in-band full duplex (IBFD). In the FD scheme, at the same time, some frequency bands may be allocated as uplink resources and other frequency bands may be allocated as downlink resources in which case the FD scheme is called subband FD (SBFD) or cross division duplex (XDD). In XDD, 'X' may mean time and/or frequency.

The disclosure proposes a resource configuration and resource allocation scheme in a wireless communication system in which the TDD and/or FD schemes coexist. In the disclosure, FD means simultaneously allocating uplink and downlink resources in a designated frequency region at the same time. In this case, if the entire system band is supported with the FD, the FD is the same as the IBFD. To that end, in the disclosure, in a wireless communication system supporting

16

the TDD and/or FD scheme, per-slot resource configuration/allocation in the time domain and per-physical resource block (PRB) resource configuration/allocation in the frequency domain may together be performed. In other words, the per-PRB resource configuration/allocation in addition to the per-slot resource configuration/allocation in the disclosure may be performed on downlink, uplink, and/or FD.

Hereinafter, for convenience of description, a wireless communication system supporting a TDD and/or FD scheme is described as an example of the system supporting various multiplexing schemes. As an example, embodiments of the disclosure are described with an example half-duplex-supportive system in which the base station supports the FD scheme capable of simultaneous transmission and reception, and the UE supports the half-duplex scheme that may perform transmission or reception individually but not simultaneously. However, it should be noted that the following embodiments may be likewise applied to wireless communication systems supporting a flexible (F) slot configuration regardless of whether to support the FD scheme. Further, the embodiments of the disclosure may be applied to post-5G next-generation systems (e.g., 6G systems) as well as 5G systems.

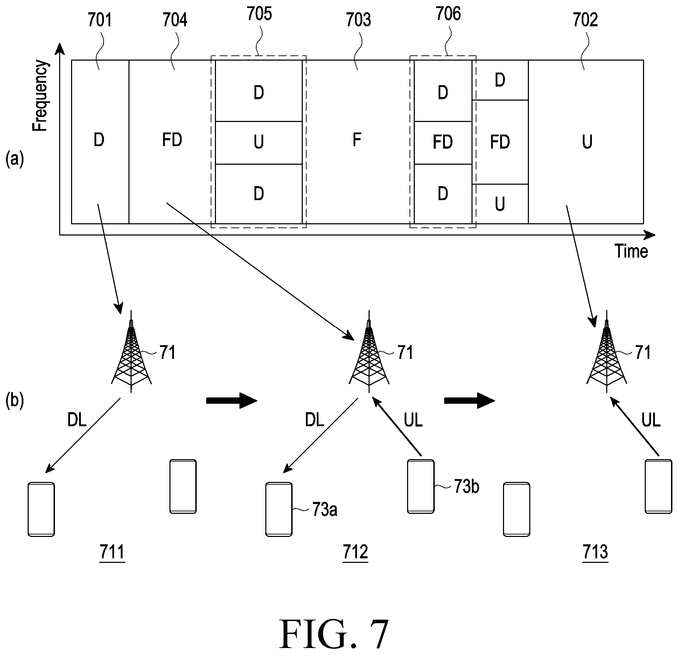

FIG. 7 is a view illustrating an example of a resource allocation scheme in a wireless communication system supporting a plurality of multiplexing schemes according to an embodiment of the disclosure.

In the example of FIG. 7, the resource regions allocated in the time domain and frequency domain may include at least one of a downlink ("D") region 701 where the downlink resource is allocated, an uplink ("U") region 702 where the uplink resource is allocated, a flexible ("F") region 703 where the downlink resource or uplink resource or FD resource may be allocated flexibly depending on the configuration information, and a full-duplex ("FD") region 704 where the FD resource where the downlink signal and uplink signal may be simultaneously transmitted/received is allocated. The FD resource may be configured/allocated per slot in the time domain, and per PRB in the frequency domain. In the disclosure, the FD resource(s) may include at least one FD slot in the time domain and may include at least one FD PRB in the frequency domain. In (a) of FIG. 7, reference numerals 701, 702, and 703 indicate a case in which the legacy TDD scheme is used as the multiplexing scheme, 705 indicates a case in which the legacy SBFD scheme is used as the multiplexing scheme, and 706 indicates a case in which a hybrid form of the legacy FDD scheme and the FD scheme according to the disclosure is used as the multiplexing scheme.

Further, the slot structure proposed in the disclosure may include at least one of a downlink ("D") slot where the downlink resource is allocated, an uplink ("U") slot where the uplink resource is allocated, a flexible ("F") slot where the U slot or FD slot may be flexibly allocated, and a full-duplex ("FD") slot where the downlink signal and uplink signal may be simultaneously transmitted/received. As an alternative embodiment, it is also possible to configure no FD slot in the F slot. Further, in the disclosure, the PRB-configurable F slot is referred to as a P slot. The example of (b) of FIG. 7 represents that when the resources of D area 701 in (a) of FIG. 7 are allocated, downlink transmission is performed by the base station 71 (711), when FD resources of the FD region 704 are allocated, downlink transmission and uplink reception are simultaneously performed by the base station 71 (712), and when the resources of the U region 702 are allocated, uplink reception is performed by the base station 71 (713). Meanwhile, as in the example of FIG. 7, when a multiplexing scheme using FD resource(s) is supported, configuration information about the FD resource(s) may be explicitly provided to UE(s) and, as an alternative embodiment, although the base station performs normal scheduling on UE(s) and does not explicitly provide configuration/allocation of FD resource(s) to the UE(s), communication using FD resource(s) is possible.

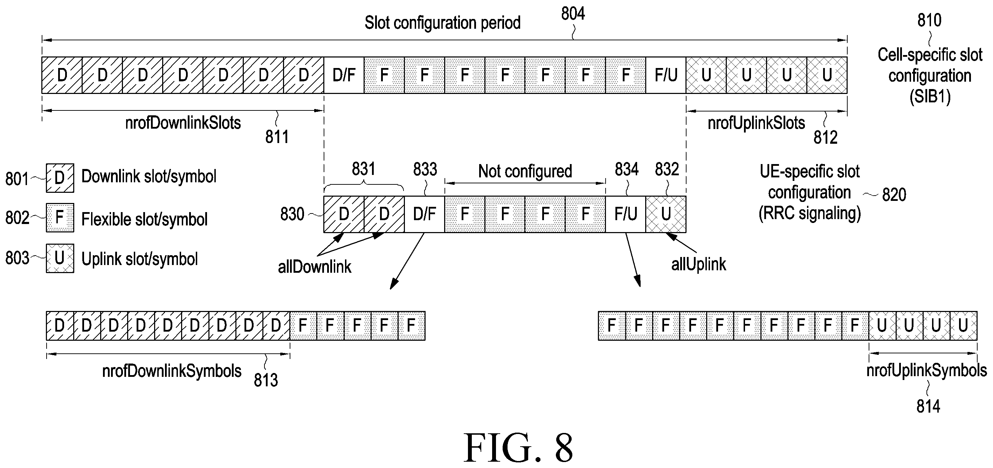

FIG. 8 is a view illustrating an example of a slot configuration method in a wireless communication system supporting a plurality of multiplexing schemes.

In the example of FIG. 8, a slot configuration includes a configuration of at least one of a D slot 801, an F slot 802, and a U slot 803. The slot configuration method of FIG. 8 represents a case in which an FD slot according to the disclosure is not used. One or more D slots 801, F slots 802, and U slots 803 may be configured and, when a plurality of ones are configured, the corresponding slots are contiguously configured. The slot configuration of FIG. 8 has a slot configuration period 804, and related configuration information, as cell-specific slot configuration information 810, may be provided to the UE through system information block 1 (SIB1) which is the system information. In the example of FIG. 8, "D/F" indicates that D slot or F slot is allocated in the corresponding slot session according to the cell-specific slot configuration information 810, and "F/U" indicates that F slot or U slot is allocated in the corresponding slot session according to the cell-specific slot configuration information 810.

Further, the number of D slots 801 and U slots 803 contiguously allocated in the slot configuration of FIG. 8 may be configured in the cell-specific slot configuration information 810. As an example of reference number 830, the slots contiguously configured, as D/F, F, F,... in the cell-specific slot configuration information 810 may be configured as D, D, D/F,.... slots according to the UE-specific slot configuration information 820. Further, the slots contiguously configured as ..., F, F, F/U in the cell-specific slot configuration information 810 may be configured as ...., F/ F/U, U slots according to the UE-specific slot configuration information 820. Reference numeral 831 in the UE-specific slot configuration information 820 indicates that all of the symbols in the corresponding slot are configured as D symbols, and 832 indicates that all of the symbols in the corresponding slot are configured as U symbols. Reference numeral 833 indicates that D symbols and F symbols coexist in the corresponding slot, and 834 indicates that F symbols and U symbols coexist in the corresponding slot. A D symbol or a U symbol may be allocated in the F symbol. The cell-specific slot configuration information 810 may include at least one of the information in Table 11 below. The UE-specific slot configuration information 820 may include at least one of the information in Table 12 below. The UE-specific slot configuration information 820 may be provided from the base station to the UE by RRC information or DCI. For example, in the slot configuration of FIG. 8, F symbols may be dynamically allocated to the UE using DCI, and the slot configuration using DCI may use, e.g., a predefined slot format. In the example of FIG. 8, the slot/symbol configuration/allocation for the UE may be indicated to the UE through a combination of the cell-specific slot configuration information, UE-specific slot configuration information, and DCI.

[Table 11]

| information | description |
| --- | --- |
| Slot configuration period | configuration period of slot configuration pattern (slot configuration |
| nrofDownlinkSlots | number of contiguous D slots from start of slot configuration pattern |
| nrofUplinkSlots | number of contiguous U slots from end of slot configuration pattern |
| nrofDownlinkSymbols | number of contiguous D symbols from start of next slot of last slot of contiguous D slots |
| nrofUplinkSymbols | number of contiguous U symbols from end of last slot before contiguous U slots |

[Table 12]

| information | description |
| --- | --- |
| Slot index | index for identifying slot in slot configuration period |
| nrofDownlinkSymbols | number of contiguous D symbols from start of slot identified by slot index |
| nrofUplinkSymbols | number of contiguous U symbols from end of slot identified by slot index |

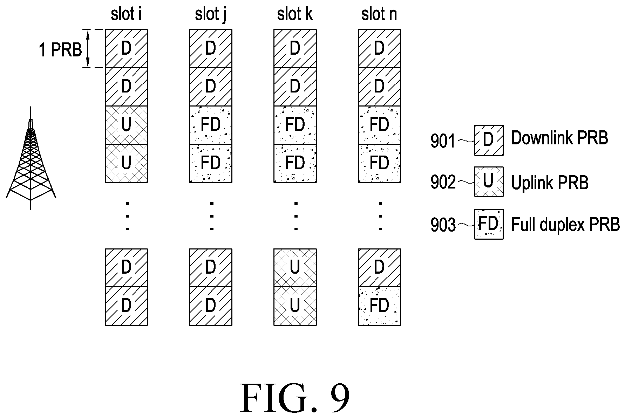

FIG. 9 is a view schematically illustrating an example of a resource format that may be configured in the time and frequency domains in a wireless communication system supporting a plurality of multiplexing schemes according to an embodiment of the disclosure.

The example of FIG. 9 represents an example in which resources are configured/allocated per slot in the time domain and per PRB in the frequency domain, by a combination of at least one of the D PRB 901, U PRB 902, and FD PRB 903. As in the example of FIG. 9, when the FD resources are configured/allocated in the time and frequency domains, it is possible to dynamically allocate FD resources considering the communication environment. In the disclosure, since the D resource, U resource, F resource, and/or FD resource each are allocated in the time and frequency domains, they may be referred to as D slot/PRB, U slot/PRB, F slot/PRB, and/or FD slot/PRB.

In FIG. 9, slot i represents an example in which in the frequency domain, resources are configured/allocated by a combination of D PRB 901 and U PRB 902. Slot j represents an example in which resources are configured/allocated by a combination of D PRB 901 and FD PRB 903 in the frequency domain. Slot k and slot n represent an example in which resources are configured/allocated by a combination of D PRB 901, U PRB 902, and FD PRB 903 in the frequency domain. The resource configuration/allocation in the entire band may be varied depending on the combination type of D PRB 901, U PRB 902, and FD PRB 903 in the frequency domain.

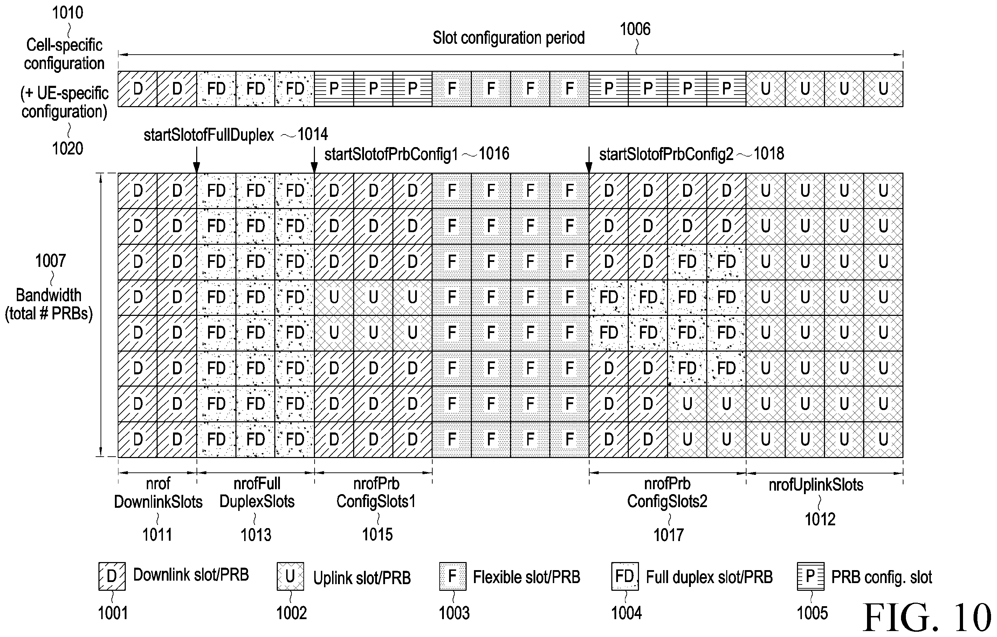

FIG. 10 is a view illustrating an example of a method for configuring FD resources in a wireless communication system supporting a plurality of multiplexing schemes according to an embodiment of the disclosure. The resource configuration method for FIG. 9 may be applied to the example of FIG. 10 in the same manner.

In the example of FIG. 10, the resource configuration includes at least one configuration of D resource 1001, U resource 1002, F resource 1003, FD resource 1004, and/or P resource 1005. The P resource 1005 means a PRB-configurable F resource. One or more D resources 1001, U resources 1002, F resources 1003, FD resources 1004, and/or P resources 1005 may be configured and, when a plurality of ones are configured, they may be contiguously configured in the corresponding slot and/or corresponding PRB. In the example of FIG. 10, the F resource 1003 means the legacy F resource having no PRB configuration, and the P resource 1005 means an F resource having a PRB configuration (PRB configurable). The slot configuration of FIG. 10 has a slot configuration period 1006, and related configuration information, as cell-specific slot configuration information 1010, may be provided from the base station through higher layer signaling information, such as system information block 1 (SIB1) or RRC information.

Further, information indicating the start slot of the FD slot and at least one of the numbers of the D slots, U slots, F slots, FD slots, and PRB-configurable P slots contiguously allocated in the slot configuration of FIG. 10 and information indicating the start slot of the PRB-configurable P slot may be included in the cell-specific slot configuration information as in the example of Table 13 below. The information denoted by reference numerals 1011, 1012, 1013, and 1014 in FIG. 10 correspond to the nrofDownlinkSlots, nrofUplinkSlots, nrofFullDuplexSlots, and startSlotofFullDuplex information, respectively. Further, the information denoted by reference numerals 1015 and 1017 in FIG. 10 may correspond to the nrofPrbConfigSlots (e.g., nrofPrbConfigSlots1, nrofPrbConfigSlots2, ...) information in Table 13, and the numbers of P slots contiguously configured may be separately configured. The information denoted by reference numerals 1016 and 1018 in FIG. 10 may correspond to the startSlotofPrbConfig (e.g., startSlotofPrbConfig1, startSlotofPrbConfig2, ...) information in Table 13 and, when a plurality of start slots are present in the P slots, they may be separately configured.

In the disclosure, the term "PRB-configurable P slot" is an example for convenience of description, and the disclosure is not limited to the term "P slot." For example, the P slot may be called by various names, such as a PRB-configurable F slot or a slot having a PRB configuration or PRB configuration information. Further, in the disclosure, when the PRB configuration information (i.e., PRB config) has P slots configured, it may include at least one of information indicating the start slot of the P slot and information indicating the number of contiguous P slots. As an alternative example, information indicating whether a P slot is present may be included in the cell-specific configuration information or UE-specific configuration information. In the disclosure, the PRB pattern information may include information indicating a PRB pattern (e.g., combination of D PRB, U PRB, and/or FD PRB) configured in the frequency domain for at least one specific slot (i.e., P slot).

[Table 13]

| information | description |
| --- | --- |
| Slot configuration period | configuration period of slot configuration pattern (slot configuration) |
| nrofDownlinkSlots | number of contiguous D slots from start of slot configuration pattern |
| nrofUplinkSlots | number of contiguous U slots from end of slot configuration pattern |
| nrofFullDuplexSlots | number of contiguous FD slots in slot configuration pattern |
| startSlotofFullDuplex | information indicating start slot of FD slot in slot configuration pattern (e.g., index of start slot) |
| startSlotofPrbConfig | information indicating start slot of PRB-configurable slot in slot configuration pattern (e.g., index of start slot) |
| nrofPrbConfigSlots | number of contiguous PRB-configurable slots in slot configuration pattern |

Further, the base station may provide the UE with configuration information about a slot designated as F slot through the UE-specific slot configuration information 1020. In this case, the F slot may be designated as a D slot, U slot, P slot, or FD slot, and configuration information about the F slot and/or P slot may be configured, e.g., in the manner described in connection with FIG. 8 and/or 10.

Further, in the frequency band 1007 of FIG. 10, the PRB configuration may be configured/indicated by the base station using cell-specific PRB configuration information or UE-specific PRB configuration information. The cell-specific PRB configuration information and the UE-specific PRB configuration information may be provided to the UE through at least one of higher layer signaling information, such as SIB or RRC information, and the above-described L1 signaling information. In the cell-specific PRB configuration information, the PRB configuration may be designated by defining a predefined PRB pattern or be configured by designating a dynamic pattern. Further, the PRB dynamically or semi-statically allocated to the UE based on the PRB configuration in the UE-specific PRB configuration information may be provided/indicated to the UE using, e.g., DCI. The predefined PRB pattern may be determined by previously providing the UE with configuration information about multiple PRB patterns mapped with index information through higher layer signaling information and then explicitly signaling the UE with index information about the PRB pattern to be applied/allocated to the UE or implicitly applying one of the multiple PRB patterns according to conditions pre-agreed between the base station and the UE.

In the disclosure, the cell-specific slot configuration information in the time domain and/or the cell-specific PRB configuration information in the frequency domain may be collectively referred to as "cell-specific configuration information." Further, the UE-specific slot configuration information in the time domain and/or the UE-specific PRB configuration information in the frequency domain may be collectively referred to as "UE-specific configuration information." When an FD resource is configured, the "cell-specific configuration information" and "UE-specific configuration information" may include configuration information about FD resources according to the disclosure.

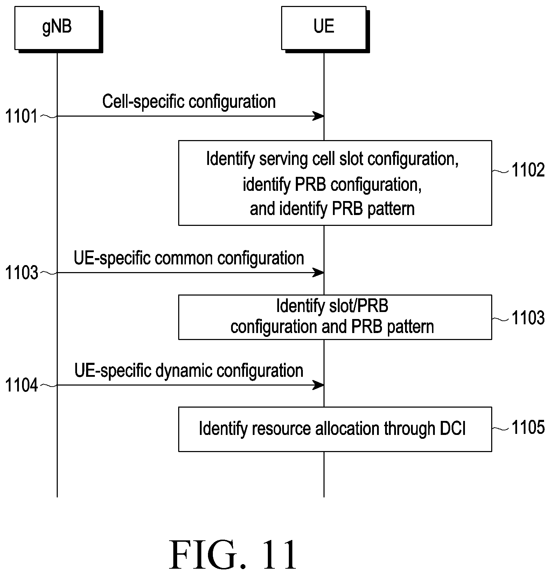

FIG. 11 is a view illustrating a signaling procedure in a method for configuring resources in time and frequency domains in a wireless communication system according to an embodiment of the disclosure. The example of FIG. 11 assumes that a PRB configuration (PRB config) in the P slot and a PRB pattern in the frequency domain are configured according to the disclosure.

In operation 1101 of FIG. 11, the base station transmits cell-specific configuration information including configuration information about P slots as in the example of FIG. 10. The cell-specific configuration information may include at least one of the slot configuration-related information exemplified in Table 13 above. It is possible to identify a serving cell slot configuration including at least one of D slot, U slot, F slot, FD slot, and P slot PRB configurable (or having a PRB configuration) based on the cell-specific configuration information. The slot configuration may have a configuration period. Further, the cell-specific configuration information may include PRB configuration information about the serving cell including at least one of D PRB, U PRB, F PRB, and FD PRB in the frequency domain of the P slot PRB configurable (or having a PRB configuration). The PRB configuration information may include at least one of information indicating the start slot of the P slot and information indicating the number of contiguous P slots. Further, as an alternative embodiment, the cell-specific configuration information may include PRB pattern information in the frequency domain for the P slot. The PRB pattern information may be information about a predefined PRB pattern or a PRB pattern dynamically allocated. For example, the PRB pattern information may include information indicating a PRB pattern (e.g., combination of D PRB, U PRB, and/or FD PRB) configured in the frequency domain for a specific slot. Further, the PRB pattern information may not be included in the cell-specific configuration information, but may be included in UE-specific configuration information. In the embodiment of FIG. 11, it is assumed that the PRB pattern information is provided through the cell-specific configuration information. Thereafter, in operation 1102, the UE receiving the cell-specific configuration information may identify a serving cell slot configuration including at least one of D slot, U slot, F slot, FD slot, and P slot PRB configurable (or having a PRB configuration) in the time domain and a serving cell PRB configuration including at least one of D PRB, U PRB, F PRB, and FD PRB in the frequency domain of the P slot PRB configurable (or having a PRB configuration). As an alternative example, when FD resources are configured in the serving cell, the UE may identify the FD slot configuration and FD PRB configuration of the serving cell. In operation 1103, the base station transmits, to the UE, UE-specific configuration information including information about the PRB pattern and the above-described PRB configuration and the slot configuration configurable to the UE in the PRB configuration and the serving cell slot configuration. The UE may identify the PRB pattern and PRB configuration of the P slot configured/allocated to the UE and, as an alternative example, the FD PRB configuration and FD slot configuration configured/allocated to the UE, based on the UE-specific configuration information. Thereafter, in operation 1104, the base station may dynamically or semi-statically indicate the FD resource to be allocated to the UE through DCI. Then, in operation 1105, the UE may receive the downlink signal or transmit the uplink signal using the FD resource indicated through DCI. In operation 1103 of FIG. 11, the UE-specific configuration information may be referred to as UE specific common configuration information and, in operation 1104, the DCI may be referred to as UE specific dynamic configuration information. In the disclosure, the UE-specific configuration information means information transmitted to a specific UE through dedicated RRC information in a narrow sense and, in a broad sense, information including the DCI transmitted to indicate dynamic resource allocation to the UE after the dedicated RRC information is transmitted, as well as the dedicated RRC information.

In the embodiments of FIGS. 9 to 11, each information element that may be configured/indicated through DCI and/or the UE-specific configuration information and cell-specific configuration information is an example, and which one of the cell-specific configuration information, UE-specific configuration information, and/or DCI each information element is to be included in may be modified in various manners. For example, the PRB configuration information and PRB pattern information defined in the disclosure may be provided to the UE through at least one of the cell-specific configuration information, UE-specific configuration information, and/or DCI. As an alternative example, it is also possible to include the PRB pattern information in the PRB configuration information and provide it to the UE. As an alternative example, the PRB configuration information may be provided to the UE through cell-specific configuration information or UE-specific configuration information, and the PRB pattern information may be provided to the UE through UE-specific configuration information or DCI.

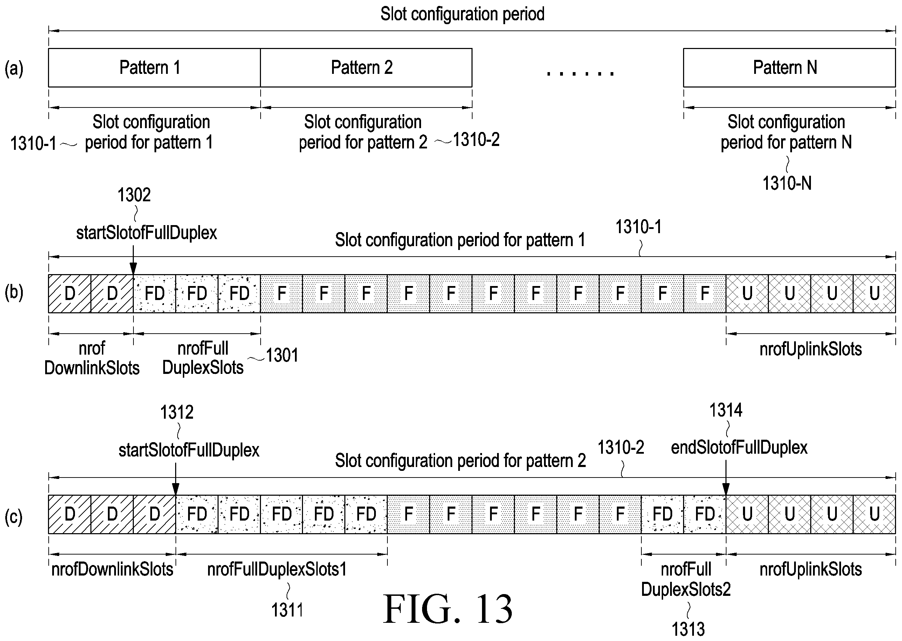

In the disclosure, the slot pattern may be allocated as a single pattern (hereinafter, "single pattern allocation") every configuration period for the slot configuration that may include P slot in the example of FIG. 10 through the cell-specific configuration information, or may be allocated as multiple patterns (hereinafter, "multiple pattern allocation") to configure a different slot pattern every configuration period or every per-pattern configuration period in the configuration period. The per-pattern configuration period means a slot configuration period for each of multiple patterns (e.g., pattern 1, pattern 2, ..., pattern N) in the slot configuration period in the example of FIG. 13 described below.

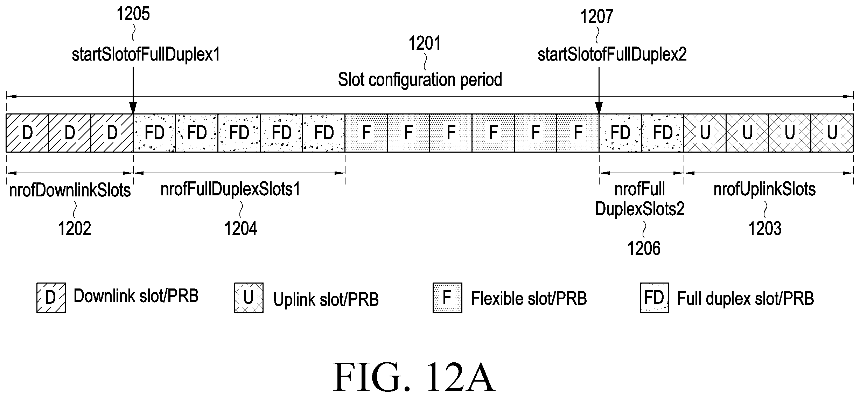

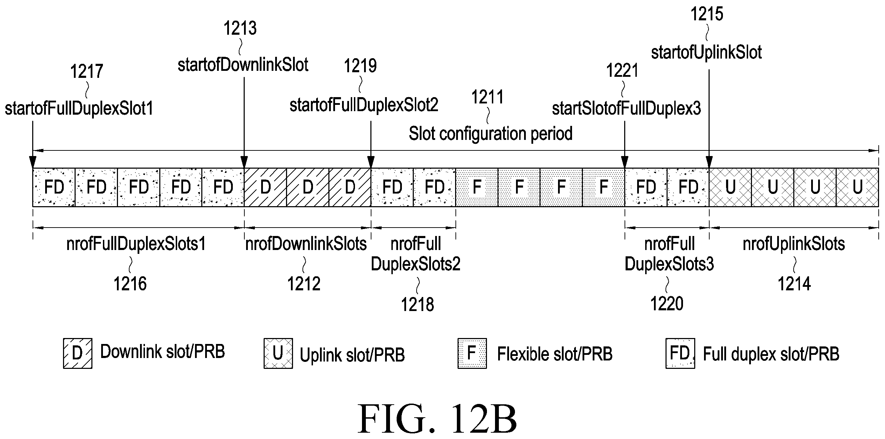

FIGS. 12A and 12B illustrate an example method for allocating a slot configuration including FD slot as a single pattern according to an embodiment of the disclosure. For convenience of description, a configuration for P slot PRB configurable (or having a PRB configuration) is excluded. However, as in the foregoing embodiment, even in the embodiment of FIGS. 12A and 12B, a P slot PRB configurable (or having a PRB configuration) may together be configured.

FIG. 12A is a view illustrating an example of a method for allocating a slot configuration including an FD slot in a single pattern according to an embodiment of the disclosure.

FIG. 12A illustrates an example in which in the "single pattern allocation," the slot format has a structure in the 5G system in which the slot configuration starts with at least one D slot and ends with at least one U slot like in the legacy slot format. In FIG. 12A, at least one FD slot may be configured between the at least one D slot and the at least one U slot. The at least one FD slot may be contiguously allocated, rather than distributed as in the example of FIG. 10, or be allocated with them distributed to at least two parts as in the example of FIG. 12A.

As described above in connection with Table 13, the slot configuration period 1201 indicates the configuration period of the slot configuration pattern (slot configuration), nrofDownlinkSlots 1202 indicates the number of contiguous D slots from the start of the slot configuration pattern, and nrofUplinkSlots 1203 indicates the number of contiguous U slots from the end of the slot configuration pattern. In FIG. 12A, nrofFullDuplexSlots1 1204 indicates the number of contiguous first FD slots in the slot configuration pattern, startSlotofFullDuplex1 1205 indicates the start slot among the contiguous first FD slots, nrofFullDuplexSlots2 1206 indicates the number of contiguous second FD slots, and startSlotofFullDuplex2 1207 indicates the start slot among the contiguous second FD slots. Table 14 below illustrates an example of cell-specific configuration information in the "single pattern allocation" according to the embodiment of FIG. 12A.

[Table 14]

| |
|---|
| subcarrier spacing |
| pattern1 information |
|     slot configuration period |
|     number of downlink slots (nrofDownlinkSlots) |
|     number of full duplex slot1's (nrofFullDuplexSlots1) |
|     start point of full duplex slot1 (startSlotofFullDuplex1) |
|     number of full duplex slot2's (nrofFullDuplexSlots2) |
|     start point of full duplex slot2 (startSlotofFullDuplex2) |
|     number of uplink slots (nrofUplinkSlots) |

Information related to the FD slot in Table 14 may be omitted as shown in the example of Table 15 below when the FD slot is not configured.

[Table 15]

| RRC information |
|---|
| subcarrier spacing |
| pattern1 information |
|     slot configuration period |
|     number of downlink slots (nrofDownlinkSlots) |
|     number of uplink slots (nrofUplinkSlots) |

In the example of FIG. 12A, when the FD slot is configured, the DCI transmitted for allocating the FD slot to the UE may include information (e.g., flag information) indicating whether to use/allocate the FD slot to the UE as in the example of Table 16 below. Further, when the flag information is "true," information related to the FD slot in Table 14 may be included in the DCI as well. In this case, the information related to the FD slot in Table 14 may be selectively included in the cell-specific configuration information.

[Table 16]

| DCI information |
|---|
| flag indicating whether FD is used |
| number of full duplex slotl's (nrofFullDuplexSlots1) |
| start point of full duplex slot1 (startSlotofFullDuplex1) |
| number of full duplex slot2's (nrofFullDuplexSlots2) |
| start point of full duplex slot2 (startSlotofFullDuplex2) |

FIG. 12B is a view illustrating another example of a method for allocating a slot configuration including an FD slot in a single pattern according to an embodiment of the disclosure.

FIG. 12B illustrates an example in which unlike the legacy slot format in the 5G system, in the slot format in the "single pattern allocation," at least one of D slot, U slot, F slot, and FD slot is freely allocated. In the example of FIG. 12B, at least one FD slot may be contiguously allocated, rather than distributed as in the example of FIG. 10, or be allocated with them distributed to at least two parts. An example of cell-specific configuration information in the "single pattern allocation" based on a free structure according to the embodiment of FIG. 12B is as shown in Table 17 below.

[Table 17]

```
subcarrier spacing
pattern1 information
        slot configuration period
        number of downlink slots (nrofDownlinkSlots)
        start point of downlink slot (startSlotofDownlink)
        number of full duplex slot1's (nrofFullDuplexSlots1)
        start point of full duplex slot1 (startSlotofFullDuplex1)
        number of full duplex slot2's (nrofFullDuplexSlots2)
        start point of full duplex slot2 (startSlotofFullDuplex2)
        ...
        number of uplink slots (nrofUplinkSlots)
        start point of uplink slot (startSlotofUplink)
```

In FIG. 12B, Slot configuration period 1211 indicates the configuration period of the slot configuration pattern (slot configuration), nrofDownlinkSlots 1212 indicates the number of contiguous D slots in the slot configuration pattern, startofDownloadSlot 1213 indicates the start slot among contiguous D slots, nrofUplinkSlots 1213 indicates the number of contiguous U slots, and startofUplinkSlot 1214 indicates the start slot among contiguous U slots.

Further, nrofFullDuplexSlots1 1216 indicates the number of contiguous first FD slots in the slot configuration pattern, startSlotofFullDuplex1 1217 indicates the start slot among the contiguous first FD slots, nrofFullDuplexSlots2 1218 indicates the number of contiguous second FD slots, and startSlotofFullDuplex2 1219 indicates the start slot among the contiguous second FD slots, nrofFullDuplexSlots3 1220 indicates the number of contiguous third FD slots, and startSlotofFullDuplex31221 indicates the start slot among contiguous third FD slots. Likewise, information related to the FD slot in Table 17 may be omitted when the FD slot is not configured.

FIG. 13 is a view illustrating an example of a method for allocating a slot configuration including an FD slot in multiple patterns according to an embodiment of the disclosure. Like in the embodiment of FIGS. 12A and 12B, in the example of FIG. 13, a configuration for the P slot PRB configurable (or having a PRB configuration) is excluded for convenience of description. However, as in the foregoing embodiment, even in the embodiment of FIG. 13, a P slot PRB configurable (or having a PRB configuration) may together be configured.

(a) of FIG. 13 illustrates a scheme for configuring a different slot pattern for each per-slot pattern configuration period in the slot configuration period according to the "multiple pattern allocation." Therefore, a plurality of slot patterns (pattern 1, pattern 2,..., pattern N) corresponding to the per-slot pattern configuration periods 1310-1, 1310-2,..., 1310-N may be configured.

(b) of FIG. 13 illustrates an example in which a first slot pattern is applied in the configuration period 1310-1 for the first slot pattern. (b) of FIG. 13 illustrates an example in which in the "multiple pattern allocation," the slot format has a structure in the 5G system in which the slot configuration starts with at least one D slot and ends with at least one U slot like in the legacy slot format. In (b) of FIG. 13, at least one FD slot may be configured between the at least one D slot and the at least one U slot. In (b) of FIG. 13, nrofFullDuplexSlots 1301 indicates the number of contiguous FD slots in the first slot pattern, and startSlotofFullDuplex1 1302 indicates the start slot among contiguous FD slots.

(c) of FIG. 13 illustrates an example in which a second slot pattern different from the first slot pattern is applied in the configuration period 1310-2 for the second slot pattern. (c) of FIG. 13 illustrates an example in which in the "multiple pattern allocation," the slot format has a structure in the 5G system in which the slot configuration starts with at least one D slot and ends with at least one U slot like in the legacy slot format. In (c) of FIG. 13, at least one FD slot may be configured between the at least one D slot and the at least one U slot. In (c) of FIG. 13, nrofFullDuplexSlots1 1311 indicates the number of contiguous first FD slots in the second slot configuration pattern, startSlotofFullDuplex1 1312 indicates the start slot among the contiguous first FD slots, nrofFullDuplexSlots2 1313 indicates the number of contiguous second FD slots in the second slot pattern, and startSlotofFullDuplex2 1314 indicates the start slot among the contiguous second FD slots. Table 18 below illustrates an example of cell-specific configuration information in the "multiple pattern allocation" according to the embodiment of FIG. 13.

[Table 18]

| |
| --- |
| subcarrier spacing<br>pattern1 information<br>     slot configuration period<br>     number of downlink slots (nrofDownlinkSlots)<br>     number of full duplex slot1's (nrofFullDuplexSlots1)<br>     start point of full duplex slot1 (startSlotofFullDuplex1)<br>     number of full duplex slot2's (nrofFullDuplexSlots2)<br>     start point of full duplex slot2 (startSlotofFullDuplex2)<br>     number of uplink slots (nrofUplinkSlots) |
| pattern2 information<br>     slot configuration period<br>     number of downlink slots (nrofDownlinkSlots)<br>     number of full duplex slotl's (nrofFullDuplexSlots1)<br>     start point of full duplex slot1 (startSlotofFullDuplex1)<br>     number of full duplex slot2's (nrofFullDuplexSlots2)<br>     start point of full duplex slot2 (startSlotofFullDuplex2)<br>     number of uplink slots (nrofUplinkSlots)<br>   ...<br>patternN information |

Further, an example of cell-specific configuration information when applying the "multiple pattern allocation" of FIG. 13 in the free structure manner described in connection with FIG. 12B is as shown in Table 19 below.

[Table 19]

| |
| --- |
| subcarrier spacing<br>pattern1 information<br>     slot configuration period<br>     number of downlink slots (nrofDownlinkSlots)<br>     start point of downlink slot (startSlotofDownlink)<br>     number of full duplex slot1's (nrofFullDuplexSlots1)<br>     start point of full duplex slot1 (startSlotofFullDuplex1)<br>     number of full duplex slot2's (nrofFullDuplexSlots2)<br>     start point of full duplex slot2 (startSlotofFullDuplex2)<br>   ...<br>     number of uplink slots (nrofUplinkSlots)<br>     start point of uplink slot (startSlotofUplink) |
| pattern2 information<br>     slot configuration period<br>     number of downlink slots (nrofDownlinkSlots)<br>     start point of downlink slot (startSlotofDownlink)<br>     number of full duplex slot1's (nrofFullDuplexSlots1)<br>     start point of full duplex slot1 (startSlotofFullDuplex1)<br>     number of full duplex slot2's (nrofFullDuplexSlots2)<br>     start point of full duplex slot2 (startSlotofFullDuplex2)<br>     number of uplink slots (nrofUplinkSlots)<br>   ...<br>     number of uplink slots (nrofUplinkSlots)<br>     start point of uplink slot (startSlotofUplink)<br>   ...<br>patternN information |

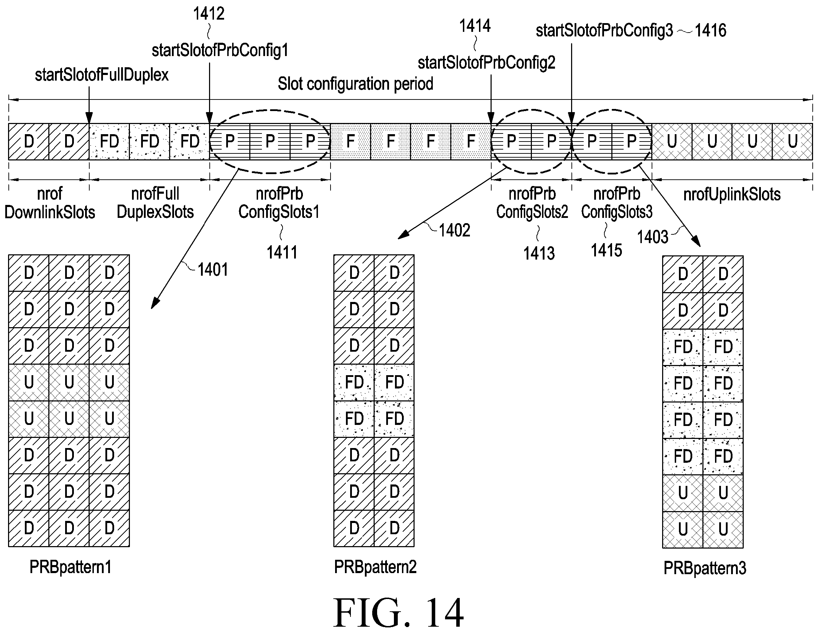

FIG. 14 is a view illustrating an example of a method for configuring a PRB pattern for slots P where a PRB configuration is possible in a slot configuration according to an embodiment of the disclosure. In the disclosure, the P slot means a slot PRB configurable (or having a PRB configuration) as described above.

As in the example of FIG. 14, when a PRB pattern is configured for the P slot, the PRB configuration information may be provided to the UE through cell-specific configuration information or UE-specific configuration information or DCI.

Reference numerals 1401, 1402, and 1403, respectively, denote the cases in which different PRB patterns are configured in at least one P slot, e.g., PRB pattern 1, PRB pattern 2, and PRB pattern 3 configured in PRB config. 1, PRB config. 2, and PRB config.3, respectively. For each PRB config., the PRB configuration information may include the numbers 1411, 1413, and 1415 of the contiguous P slot(s) and information 1412, 1414, and 1416 about the start slot among the P slot(s) where the corresponding PRB config. is configured. In PRB pattern 2 and PRB pattern 3 of reference numerals 1402 and 1403, FD PRBs may be configured based on the PRB pattern information. Further, the base station and the UE may recognize the PRB pattern in the frequency domain by denoting the index of a specific PRB pattern through PRB pattern information (e.g., predefined PRB pattern indicator) in the example of Table 20 in the context where they are aware of all the predefined PRB patterns (or pre-agreed). For example, in FIG. 14, when the UE receives the indicator (or index) indicating "PRBpattern 1" from the base station, the UE may determine D PRB and U PRB for each PRB in the entire frequency band. Further, when the UE receives the indicator (or index) indicating "PRBpattern 2" from the base station, the UE may determine D PRB and FD PRB for each PRB in the entire frequency band. Likewise, when the UE receives the indicator (or index) indicating "PRBpattern 3" from the base station, the UE may determine D PRB, U PRB, and FD PRB for each PRB in the entire frequency band. As in the example of FIG. 14, the number of predefined PRB patterns is not limited to three and may be freely set to N. Further, in defining the predefined PRB pattern, any type is possible, and the PRB pattern is not limited. For example, if there are K PRBs, since D PRB, U PRB, and FD PRB may be selected from each PRB, up to $3^K$ PRB patterns may be previously defined. Table 20 below shows an example of PRB configuration information (e.g., when configured from PRB config.1 to PRB config.N) that may be provided to the UE through cell-specific configuration information or UE-specific configuration information or DCI.

[Table 20]

| |
|---|
| PRB config.1 information<br>　　　slot start point (startSlotofPrbConfig1)<br>　　　number of contiguous slots (nrofPrbConfigSlots1)<br>　　　pre-defined PRB pattern indicator |
| PRB config.2 information<br>　　　slot start point (startSlotofPrbConfig2)<br>　　　number of contiguous slots (nrofPrbConfigSlots2)<br>　　　PRB pattern2 indication sequence<br>...<br>PRB config.N information |

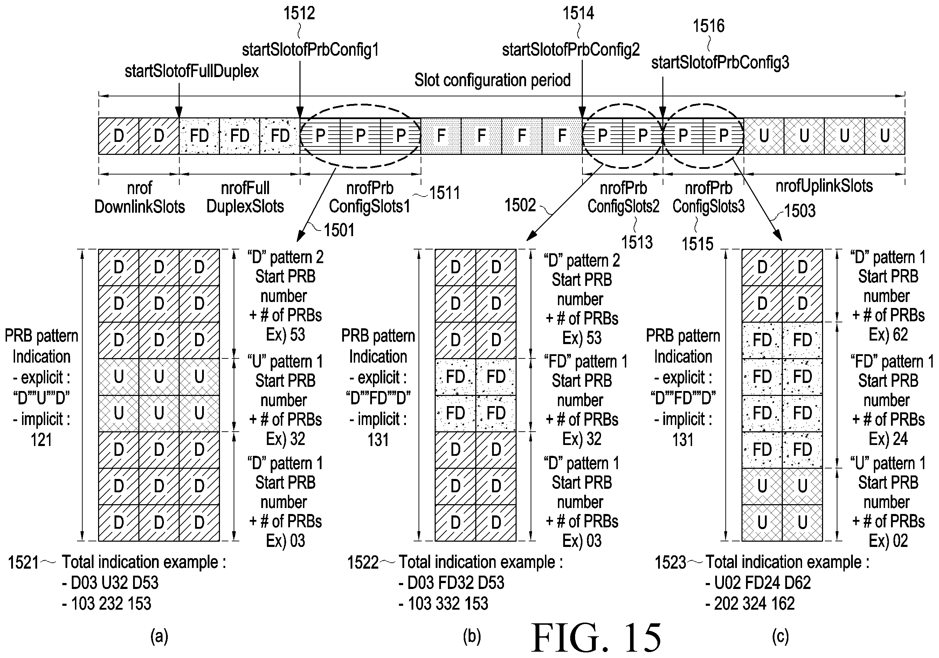

FIG. 15 is a view illustrating a specific example of a method for configuring a PRB pattern for slots P where a PRB configuration is possible in a slot configuration according to an embodiment of the disclosure. FIG. 15 illustrates an example of a specific method for configuring the PRB configuration information in the example of FIG. 14.

Reference numerals 1501, 1502, and 1503, respectively, denote the cases in which different PRB configurations, e.g., PRB config. 1, PRB config. 2, and PRB config.3, are configured in at least one P slot. For each PRB config., the PRB configuration information may include the numbers 1511, 1513, and 1515 of the contiguous P slot(s) where the corresponding PRB config. is configured, and information 1512, 1514, and 1516 about the start slot among the P slot(s) where the corresponding PRB config. is configured. In PRB config.2 and PRB config.3 of reference numerals 1502 and 1503, FD PRBs may be configured based on the PRB configuration information.

Reference numeral 1521 in (a) of FIG. 15 illustrates an example of PRB pattern information for PRB config. 1. If "D03 U32 D53" is set as the PRB pattern information for the PRB pattern of PRB config. 1, D03 means that the start PRB index of D PRB is "0," the number of contiguous D PRBs is "3," the start PRB index of U PRB is "3," the number of contiguous U PRBs is "2," the start PRB index of D PRB is "5," and the number of contiguous D PRBs is "3." If the numbers "1," "2," and "3" are likewise applied to D PRB, U PRB, and FD PRB, respectively, PRB pattern information about the PRB pattern of PRB config.1 may be set as "103 232 153." Reference numerals 1522 and 1523 in (b) and (c) of FIG. 15 illustrate an example of PRB pattern information for the PRB patterns of PRB config.2 and PRB config.3, respectively. The PRB pattern information for the PRB patterns of PRB config.2 and PRB config.3 may also be configured in the same manner as that described in connection with FIG. 15(a). Further, since the indication information indicating the PRB pattern in the example of FIG. 15 is configured in the order of D PRB, FD PRB, and D PRB in the frequency domain, e.g., in the case denoted by reference numeral 1502, the indication information may be set as "131" by applying the numbers "1," "2," and "3" to D PRB, U PRB, and FD PRB, respectively.

In configuring the PRB config and PRB pattern as in the example of FIG. 15, Table 21 below shows an example of PRB configuration information (when configured from PRB config.1 to PRB config.N) and PRB pattern information that may be provided to the UE through cell-specific configuration information or UE-specific configuration information or DCI.

[Table 21]

```
PRB config.1 information
        slot start point (startSlotofPrbConfig1)
        number of contiguous slots (nrofPrbConfigSlots1)
        PRB pattern1 indication sequence
            D/U/FD
            PRB start point
            number of contiguous PRBs
            ...
PRB config.2 information
        slot start point (startSlotofPrbConfig2)
        number of contiguous slots (nrofPrbConfigSlots2)
        PRB pattern2 indication sequence
            D/U/FD
            PRB start point
            number of contiguous PRBs
            ...
...
PRB config.N information
```

In Table 21, the PRB configuration information (PRB config.1 information, PRB config.2 information, ..., PRB config.N information) may include at least one of the slot start point indicating the start slot of P slot and the number of contiguous slots indicating the number of contiguous P slots from the start slot. The PRB pattern information may include at least one of the PRB pattern indication sequence indicating D, U, or FD PRB, the PRB start point indicating the start PRB of D, U, or FD PRB, and the number of contiguous PRBs indicating the number of contiguous D, U, or FD PRBs from the start PRB in the frequency domain. Further, in the above-described embodiments, the PRB configuration information and PRB pattern information are described as being individual pieces of information but, as in the example of Table 21 above, the configuration information may be configured so that the PRB pattern information is included in the PRB configuration information.

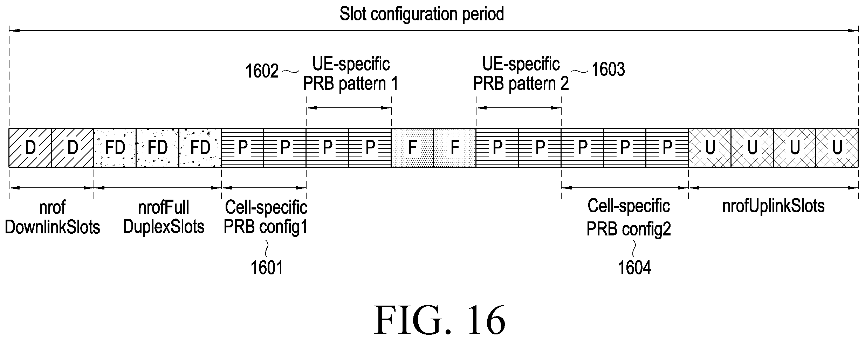

FIG. 16 is a view illustrating another example of a method for configuring a PRB pattern for P slots where a PRB configuration is possible in a slot configuration according to an embodiment of the disclosure.

Referring to FIG. 16, reference numerals 1601 and 1604 indicate a case in which, e.g., a cell-specific PRB config is configured in at least one P slot, and reference numerals 1602 and 1603 indicate a case in which, e.g., a UE-specific PRB config is configured in at least one P slot. As such, the PRB configuration information may be configured using cell-specific configuration information 1601 and 1604 or UE-specific configuration information 1602 and 1603. An example configuration of the cell-specific configuration information 1601 and 1604 or UE-specific configuration information 1602 and 1603 is as shown in Tables 20 and 21 above. Therefore, in the disclosure, the PRB configuration information (PRB config) may be configured using cell-specific configuration information or UE-specific configuration information, and the PRB configuration information (PRB config) and PRB pattern information may be provided, as individual pieces of information, to the UE, or the PRB configuration information (PRB config) including the PRB pattern information may be provided to the UE.

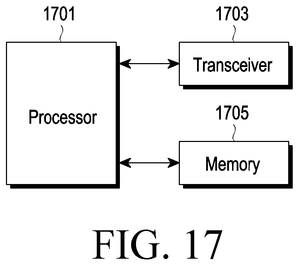

FIG. 17 is a view illustrating an example of a configuration of a network entity in a wireless communication system according to an embodiment of the disclosure. The network entity of FIG. 17 may be either the UE or the base station described in connection with the embodiments of FIGS. 1 to 16.

According to an embodiment of the disclosure, the network entity may include a processor 1701 controlling the overall operation of the network entity, a transceiver 1703 including a transmitter and a receiver, and a memory 1705. Without limited thereto, the network entity may include more or less components than those shown in FIG. 17.

According to an embodiment of the disclosure, the transceiver 1703 may transmit/receive signals to/from at least one of other network entities or a UE. The transmitted/received signals may include at least one of control information and data. When the network entity of FIG. 17 is a core network entity, signals transmitted/received between the network entity and the UE may be transmitted/received via the RAN.

According to an embodiment of the disclosure, the processor 1701 may control the overall operation of the network entity to perform operations according to a combination of one or more of the embodiments of FIGS. 1 to 16 described above. The processor 1701, the transceiver 1703, and the memory 1705 are not necessarily implemented in separate modules but rather as one component, such as a single chip. The processor 1701 may be an application processor (AP), a communication processor (CP), a circuit, an application-specific circuit, or at least one processor. The transceiver 1703 may include at least one communication interface for wiredly/wirelessly transmitting/receiving signals to/from another network entity.

According to an embodiment of the disclosure, the memory 1705 may store a default program for operating the network entity, application programs, and data, such as configuration information. The memory 1705 provides the stored data according to a request of the processor 1701. The memory 1705 may include a storage medium, such as ROM, RAM, hard disk, CD-ROM, and DVD, or a combination of storage media. There may be provided a plurality of memories 1705. The processor 1701 may perform at least one of the above-described embodiments based on a program for performing operations according to at least one of the above-described embodiments stored in the memory 1705.

The methods according to the embodiments descried in the specification or claims of the disclosure may be implemented in hardware, software, or a combination of hardware and software.

When implemented in software, there may be provided a computer readable storage medium storing one or more programs (software modules). One or more programs stored in the computer readable storage medium are configured to be executed by one or more processors in an electronic device. One or more programs include instructions that enable the electronic device to execute methods according to the embodiments described in the specification or claims of the disclosure.

The programs (software modules or software) may be stored in random access memories, non-volatile memories including flash memories, read-only memories (ROMs), electrically erasable programmable read-only memories (EEPROMs), magnetic disc storage devices, compact-disc ROMs, digital versatile discs (DVDs), or other types of optical storage devices, or magnetic cassettes. Or, the programs may be stored in a memory constituted of a combination of all or some thereof. As each constituting memory, multiple ones may be included.

The programs may be stored in attachable storage devices that may be accessed via a communication network, such as the Internet, Intranet, local area network (LAN), wide area network (WLAN), or storage area network (SAN) or a communication network configured of a combination thereof. The storage device may connect to the device that performs embodiments of the disclosure via an external port. A separate storage device over the communication network may be connected to the device that performs embodiments of the disclosure.

The embodiments herein are provided merely for better understanding of the disclosure, and the disclosure should not be limited thereto or thereby. It should be appreciated by one of ordinary skill in the art that various changes in form or detail may be made to the embodiments without departing from the scope of the disclosure defined by the following claims. Further, the embodiments may be practiced in combination.

**Claims**

1. A method for configuring resources by a base station in a wireless communication system supporting a plurality of multiplexing schemes, the method comprising:

   transmitting configuration information including a number of contiguous slots in which a physical resource block (PRB) is configurable in a frequency domain and information about a start slot among the contiguous slots; and
   transmitting information indicating at least one resource to be allocated to a user equipment (UE) based on the configuration information.

2. The method of claim 1, wherein the PRB-configurable contiguous slots are configured among flexible slots in which a downlink slot, an uplink slot, or a full duplex (FD) slot is configurable.

3. The method of claim 2, wherein the configuration information is transmitted using at least one of cell-specific configuration information and UE-specific configuration information.

4. The method of claim 3, wherein the at least one of the cell-specific configuration information and the UE-specific configuration information includes PRB pattern information in which at least one PRB among a downlink PRB, an uplink PRB, and an FD PRB is configured in the frequency domain, for at least one specific slot, and
   wherein the PRB pattern information includes a number of the at least one PRB which is contiguously allocated and information indicating a start PRB.

5. The method of claim 3, wherein the cell-specific configuration information includes information indicating a slot pattern,

   wherein in case that the slot pattern indicates a single pattern allocation, the slot pattern is set to be identical every first configuration period, and
   wherein in case that the slot pattern indicates a multiple pattern allocation, the slot pattern is set to differ every second configuration period.

6. A base station in a wireless communication system supporting a plurality of multiplexing schemes, comprising:

   a transceiver; and
   a processor configured to transmit, through the transceiver, configuration information including a number of contiguous slots in which a physical resource block (PRB) is configurable in a frequency domain and information about a start slot among the contiguous slots and transmit, through the transceiver, information indicating at least one resource to be allocated to a UE based on the configuration information.

7. The base station of claim 6 applied to operate according to a method of any one of claims 2-5.

8. A method performed by a UE in a wireless communication system supporting a plurality of multiplexing schemes, the method comprising:

   receiving, from a base station, configuration information including a number of contiguous slots in which a physical resource block (PRB) is configurable in a frequency domain and information about a start slot among the contiguous slots;
   receiving downlink control information indicating at least one resource to be allocated to the UE; and
   performing reception of a downlink signal or transmission of an uplink signal using the at least one resource, based on the configuration information and the downlink control information.

9. The method of claim 8, wherein the PRB-configurable contiguous slots are configured among flexible slots in which a downlink slot, an uplink slot, or a full duplex (FD) slot is configurable.

10. The method of claim 9, wherein the configuration information is received using at least one of cell-specific configuration information and UE-specific configuration information.

11. The method of claim 10, wherein the at least one of the cell-specific configuration information and the UE-specific configuration information includes PRB pattern information in which at least one PRB among a downlink PRB, an uplink PRB, and an FD PRB is configured in the frequency domain, for at least one specific slot, and
    wherein the PRB pattern information includes a number of the at least one PRB which is contiguously allocated and information indicating a start PRB.

12. The method of claim 10, wherein the cell-specific configuration information includes information indicating a slot pattern,

    wherein in case that the slot pattern indicates a single pattern allocation, the slot pattern is set to be identical every first configuration period, and
    wherein in case that the slot pattern indicates a multiple pattern allocation, the slot pattern is set to differ every second configuration period.

13. A UE in a wireless communication system supporting a plurality of multiplexing schemes, comprising:

    a transceiver; and
    a processor configured to receive, from a base station through the transceiver, configuration information including a number of contiguous slots in which a physical resource block (PRB) is configurable in a frequency domain and information about a start slot among the contiguous slots, receive, through the transceiver, downlink control information indicating at least one resource to be allocated to the UE, and perform reception of a downlink signal or transmission of an uplink signal, through the transceiver, using the at least one resource, based on the configuration information and the downlink control information.

**14.** The UE of claim 13 applied to operate according to a method of any one of claims 9-12.

110

One subframe

102

$N_{symb}^{subframe,\mu}$ OFDM symbols

1 OFDM

1 subcarrier

103

$k = N_{RB,x}^{max,\mu} N_{sc}^{RB} - 1$

104

Resource block $N_{sc}^{RB}$ subcarriers

$N_{RB}^{\mu} N_{sc}^{RB}$ subcarriers

101

Resource element (k,l)

$k = 0$

$\bar{l} = 0$     $\bar{l} = 14 \cdot 2^{\mu} - 1$

Frequency

Time

FIG. 1

EP 4 637 073 A1

FIG. 2

FIG. 3

404

Duration

403

Frequency resources

410

UE bandwidth part

420

Slot

Frequency

Time

401
Control resource set #1

402
Control resource set #2

FIG. 4

FIG. 5

FIG. 6A

FIG. 6B

FIG. 7

FIG. 8

EP 4 637 073 A1

slot i  slot j  slot k  slot n

1 PRB

D  D  D  D
D  D  D  D
U  FD  FD  FD
U  FD  FD  FD

D  D  U  D
D  D  U  FD

901 ~ D  Downlink PRB

902 ~ U  Uplink PRB

903 ~ FD  Full duplex PRB

FIG. 9

1010

Cell-specific
configuration

(+ UE-specific
configuration)

1020

Slot configuration period 1006

| D | D | FD | FD | FD | P | P | P | F | F | F | F | P | P | P | P | U | U | U | U |

startSlotofFullDuplex ~1014

startSlotofPrbConfig1 ~1016

startSlotofPrbConfig2 ~1018

1007

Bandwidth
(total # PRBs)

| D | D | FD | FD | FD | D | D | D | F | F | F | F | D | D | D | D | U | U | U | U |
| D | D | FD | FD | FD | D | D | D | F | F | F | F | D | D | D | D | U | U | U | U |
| D | D | FD | FD | FD | D | D | D | F | F | F | F | D | D | FD | FD | U | U | U | U |
| D | D | FD | FD | FD | U | U | U | F | F | F | F | FD | FD | FD | FD | U | U | U | U |
| D | D | FD | FD | FD | U | U | U | F | F | F | F | FD | FD | FD | FD | U | U | U | U |
| D | D | FD | FD | FD | D | D | D | F | F | F | F | D | D | FD | FD | U | U | U | U |
| D | D | FD | FD | FD | D | D | D | F | F | F | F | D | D | U | U | U | U | U | U |
| D | D | FD | FD | FD | D | D | D | F | F | F | F | D | D | U | U | U | U | U | U |

nrof
DownlinkSlots
1011

nrofFull
DuplexSlots
1013

nrofPrb
ConfigSlots1
1015

nrofPrb
ConfigSlots2
1017

nrofUplinkSlots
1012

| D | Downlink slot/PRB  1001 | U | Uplink slot/PRB  1002 | F | Flexible slot/PRB  1003 | FD | Full duplex slot/PRB  1004 | P | PRB config. slot  1005 |

FIG. 10

gNB

UE

1101 — Cell-specific configuration →

Identify serving cell slot configuration,
identify PRB configuration,
and identify PRB pattern — 1102

1103 — UE-specific common configuration →

Identify slot/PRB
configuration and PRB pattern — 1103

1104 — UE-specific dynamic configuration →

Identify resource allocation through DCI — 1105

# FIG. 11

FIG. 12A

EP 4 637 073 A1

FIG. 12B

EP 4 637 073 A1

FIG. 13

EP 4 637 073 A1

FIG. 14

**FIG. 15**

startSlotofFullDuplex — 1512
startSlotofPrbConfig1 — 1514
startSlotofPrbConfig2 — 1516
startSlotofPrbConfig3

Slot configuration period

nrof DownlinkSlots | nrofFull DuplexSlots | nrofPrb ConfigSlots1 (1501/1511) ... nrofPrb ConfigSlots2 (1502/1513) ... nrofPrb ConfigSlots3 (1503/1515) | nrofUplinkSlots

**(a)**

"D" pattern 2 Start PRB number + # of PRBs  Ex) 53
"U" pattern 1 Start PRB number + # of PRBs  Ex) 32
"D" pattern 1 Start PRB number + # of PRBs  Ex) 03

PRB pattern Indication
- explicit : "D""U""D"
- implicit : 121

1521 ～ Total indication example :
- D03 U32 D53
- 103 232 153

**(b)**

"D" pattern 2 Start PRB number + # of PRBs  Ex) 53
"FD" pattern 1 Start PRB number + # of PRBs  Ex) 32
"D" pattern 1 Start PRB number + # of PRBs  Ex) 03

PRB pattern Indication
- explicit : "D""FD""D"
- implicit : 131

1522 ～ Total indication example :
- D03 FD32 D53
- 103 332 153

**(c)**

"D" pattern 1 Start PRB number + # of PRBs  Ex) 62
"FD" pattern 1 Start PRB number + # of PRBs  Ex) 24
"U" pattern 1 Start PRB number + # of PRBs  Ex) 02

PRB pattern Indication
- explicit : "D""FD""D"
- implicit : 131

1523 ～ Total indication example :
- U02 FD24 D62
- 202 324 162

Slot configuration period

1602 ～ UE-specific
PRB pattern 1

UE-specific ～ 1603
PRB pattern 2

| D | D | FD | FD | FD | P | P | P | P | F | F | P | P | P | P | P | U | U | U | U |

nrof
DownlinkSlots

nrofFull
DuplexSlots

Cell-specific
PRB config1
)
1601

Cell-specific
PRB config2
)
1604

nrofUplinkSlots

# FIG. 16

FIG. 17

## INTERNATIONAL SEARCH REPORT

| | International application No. |
|---|---|
| | **PCT/KR2023/001040** |

| A. | CLASSIFICATION OF SUBJECT MATTER |
|---|---|
| | **H04L 5/14**(2006.01)i; **H04L 5/00**(2006.01)i; **H04W 72/04**(2009.01)i |

According to International Patent Classification (IPC) or to both national classification and IPC

| B. | FIELDS SEARCHED |
|---|---|

Minimum documentation searched (classification system followed by classification symbols)

H04L 5/14(2006.01); H04L 1/00(2006.01); H04L 5/00(2006.01); H04W 72/04(2009.01); H04W 72/12(2009.01); H04W 74/08(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: PRB 설정(PRB configuration), 슬롯(slot), 시작 슬롯(starting slot), 자원(resource), DCI

| C. | DOCUMENTS CONSIDERED TO BE RELEVANT |
|---|---|

| Category* | Citation of document, with indication, where appropriate, of the relevant passages | Relevant to claim No. |
|---|---|---|
| Y<br><br>A | KR 10-2022-0044975 A (ZTE CORPORATION) 12 April 2022 (2022-04-12)<br>See paragraphs [0044]-[0047]; claims 1 and 4; and figures 9-10. | 1,6,8,13<br><br>2-5,7,9-12,14 |
| Y | KR 10-2021-0044230 A (GUANGDONG OPPO MOBILE TELECOMMUNICATIONS CORP., LTD.) 22 April 2021 (2021-04-22)<br>See paragraphs [0028]-[0079]; claims 1-2; and figures 2-3. | 1,6,8,13 |
| A | KR 10-2460664 B1 (SAMSUNG ELECTRONICS CO., LTD.) 28 October 2022 (2022-10-28)<br>See paragraphs [0331]-[0334]; and figure 21. | 1-14 |
| A | KR 10-2012-0138423 A (SAMSUNG ELECTRONICS CO., LTD.) 26 December 2012 (2012-12-26)<br>See paragraphs [0070]-[0076]; and figures 9-10. | 1-14 |

| ✓ | Further documents are listed in the continuation of Box C. | ✓ | See patent family annex. |
|---|---|---|---|

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 October 2023** | **12 October 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

# EP 4 637 073 A1

**INTERNATIONAL SEARCH REPORT**

**C.    DOCUMENTS CONSIDERED TO BE RELEVANT**

| Category* | Citation of document, with indication, where appropriate, of the relevant passages | Relevant to claim No. |
|---|---|---|
| A | KR 10-2022-0144839 A (LG ELECTRONICS INC.) 27 October 2022 (2022-10-27)<br>See paragraphs [0428]-[0464]; and figure 23. | 1-14 |

Form PCT/ISA/210 (second sheet) (July 2022)

**EP 4 637 073 A1**

## INTERNATIONAL SEARCH REPORT
### Information on patent family members

| International application No. |
|---|
| **PCT/KR2023/001040** |

| Patent document cited in search report | | | Publication date (day/month/year) | Patent family member(s) | | | Publication date (day/month/year) |
|---|---|---|---|---|---|---|---|
| KR | 10-2022-0044975 | A | 12 April 2022 | CN | 114208377 | A | 18 March 2022 |
| | | | | EP | 4008156 | A1 | 08 June 2022 |
| | | | | EP | 4008156 | A4 | 10 August 2022 |
| | | | | TW | 202116105 | A | 16 April 2021 |
| | | | | US | 2022-0159734 | A1 | 19 May 2022 |
| | | | | WO | 2021-016983 | A1 | 04 February 2021 |
| KR | 10-2021-0044230 | A | 22 April 2021 | AU | 2018-435332 | A1 | 18 March 2021 |
| | | | | CN | 112534940 | A | 19 March 2021 |
| | | | | EP | 3826413 | A1 | 26 May 2021 |
| | | | | EP | 3826413 | A4 | 04 August 2021 |
| | | | | TW | 202008827 | A | 16 February 2020 |
| | | | | US | 2021-0176742 | A1 | 10 June 2021 |
| | | | | WO | 2020-024271 | A1 | 06 February 2020 |
| KR | 10-2460664 | B1 | 28 October 2022 | EP | 3697012 | A1 | 19 August 2020 |
| | | | | US | 11456782 | B2 | 27 September 2022 |
| | | | | US | 2021-0297118 | A1 | 23 September 2021 |
| | | | | WO | 2019-093768 | A1 | 16 May 2019 |
| KR | 10-2012-0138423 | A | 26 December 2012 | EP | 2721891 | A1 | 23 April 2014 |
| | | | | EP | 2721891 | B1 | 05 February 2020 |
| | | | | US | 2012-0322483 | A1 | 20 December 2012 |
| | | | | US | 8862171 | B2 | 14 October 2014 |
| | | | | WO | 2012-173429 | A1 | 20 December 2012 |
| KR | 10-2022-0144839 | A | 27 October 2022 | CN | 115606147 | A | 13 January 2023 |
| | | | | EP | 4123954 | A1 | 25 January 2023 |
| | | | | JP | 2023-529747 | A | 11 July 2023 |
| | | | | US | 11483856 | B2 | 25 October 2022 |
| | | | | US | 2022-0225388 | A1 | 14 July 2022 |
| | | | | US | 2023-0047006 | A1 | 16 February 2023 |
| | | | | WO | 2022-154579 | A1 | 21 July 2022 |

Form PCT/ISA/210 (patent family annex) (July 2022)